# EUROPÄISCHE PATENTSCHRIFT

(11) **EP 1 499 665 B1**
(45) Veröffentlichungstag und Bekanntmachung des Hinweises auf die Patenterteilung: **22.08.2007**
(21) Anmeldenummer: 03722508.3
(22) Anmeldetag: 17.04.2003
(51) Int. Cl.: C08K 3/22, C08K 3/08, C09D 5/24

(54) **GEMISCH ZUM AUFBRINGEN EINES POLYMEREN KORROSIONSBEST NDIGEN VERSCHLEISSARM UMFORMBAREN BERZUGS UND VERFAHREN ZUM HERST ELLEN DIESES BERZUGS**
MIXTURE FOR APPLYING A NON-CORROSIVE, POLYMER COATING WHICH CAN BE SHAPED IN A LOW-ABRASIVE MANNER, AND METHOD FOR PRODUCING THE SAME
MELANGE DESTINE A L'APPLICATION D'UN REVETEMENT POLYMERE RESISTANT A LA CORROSION, POUVANT ETRE FA ONNE SANS USURE, ET PROCEDE DE FABRICATION DE CE REVETEMENT

(30) Priorität: 20.04.2002 DE 10217624; 12.10.2002 DE 10247691; 03.12.2002 DE 10256286
(43) Veröffentlichungstag der Anmeldung: 26.01.2005
(73) Patentinhaber: Chemetall GmbH, 60487 Frankfurt (DE); Gros, Georg, 77728 Oppenau (DE)
(72) Erfinder: GROS, Georg, 77728 Oppenau (DE); MAURUS, Norbert, 63225 Langen (DE); SCHINZEL, Marcus, 65817 Eppstein (DE)
(74) Vertreter: Hübner, Günter
(86) Internationale Anmeldenummer: PCT/EP2003/004057
(87) Internationale Veröffentlichungsnummer: WO 2003/089507

(56) Entgegenhaltungen:
- EP-A- 0 309 286
- EP-A- 0 328 047
- US-A- 3 175 991
- US-A- 5 750 249
- US-A- 5 855 820
- US-B1- 6 284 817

## Beschreibung

Die vorliegende Erfindung betrifft ein Gemisch zum Aufbringen eines polymeren, korrosionsbeständigen, verschleißarm umformbaren und elektrisch leitfähigen Überzugs auf eine Unterlage, insbesondere eine metallische Unterlage wie z.B. ein Stahlblech, die gegebenenfalls vorher mit Zink oder einer Zink-haltigen Legierung überzogen und anschließend gegebenenfalls mit einer Vorbehandlung beschichtet wurde. Der Überzug soll insbesondere als Schweißprimer dienen.

Heute werden in Großserie Schweißprimer der 1. Generation im Automobilbau eingesetzt, die aus Gründen des Korrosionsschutzes chromhaltig sind, weil es bis heute sehr schwierig ist, im Korrosionsschutz gleichwertige und zugleich umweltfreundlichere Bestandteile anstelle von Chrom-haltigen Verbindungen einzusetzen. Die zum elektrischen Schweißen erforderliche elektrische Leitfähigkeit der etwa 2,5 bis 9 µm dicken polymeren Beschichtungen wird durch einen sehr hohen Gehalt an pulverigem metallischen Zink eingebettet in einer polymeren Matrix erworben. Aufgrund von Feuchtigkeit in jeder polymeren Beschichtung neigt jedoch metallisches Zink schnell zur Oxidation unter Bildung von weißen Ausblühungen (Weißrost). Durch die Oxidation des Zinkpulvers kann sich jedoch die korrosionsschützende Wirkung und die elektrische Leitfähigkeit des metallischen Zinks allmählich mit fortschreitender Weißrostbildung aufbrauchen. An die begrenzt korrosionsbeständigen Schweißprimer der ersten Generation werden auch bezüglich der elektrischen Schweißbarkeit nur gewisse Anforderungen gestellt: Es genügt, wenn von einem Schweißautomaten 600 Schweißpunkte durch zwei aufeinander liegende, beidseitig beschichtete Stahlbleche von etwa 0,5 bis 2,0 mm Dicke gesetzt werden können, bevor die Schweißelektroden neu bearbeitet oder ausgetauscht werden. Der Aufbau der Beschichtungen auf den Stahlblechen umfaßt dabei typischerweise zuerst eine Schicht von Zink oder einer Zinklegierung von etwa 2 bis 7,5 µm Dicke, darauf eine Vorbehandlungsschicht von etwa 0,01 bis 1,0 µm Dicke und schließlich eine Schweißprimerschicht von einer Dicke von deutlich unter 10 µm Dicke. Es sind daher bei jeweils drei verschiedenen, übereinander aufgebrachten, jeweils doppelseitigen Beschichtungen insgesamt 2 Bleche mit 12 Schichten bei jedem Schweißpunkt durchzukontaktieren.

An Schweißprimerbeschichtungen der 2. Generation werden für den Einsatz im Automobilbau jedoch weitaus höhere Anforderungen gerichtet: 1.) Die Korrosionsbeständigkeit eines Flansches aus zwei Blechen soll trotz Chromfreiheit etwa um den Faktor drei höher sein, da hier das erfolgreiche Durchstehen eines extrem aggressiven Korrosionschutz-Wechseltests nach VDA 621-415 mit 20 anstelle nur 10 Zyklen ä jeweils einer Woche Dauer mit Salzsprühtests, Kondenswassertests und Rekondensieren ohne das Erscheinen von Rotrost gefordert wird. Über die Testdauer von 20 Wochen wirkt sich der Test progressiv stärker aus. 2.) Beim elektrischen Schweißen soll die mit einem Schweißautomaten erreichbare Zahl an Schweißpunkten entsprechend bei mindestens 1200 statt nur bei 600 liegen, bevor die Schweißelektroden ausgetauscht oder nachgearbeitet werden. 3.) Für die in immer stärkerem Ausmaß im Automobilbau genutzte Klebetechnik anstelle des Schweißens ist es erforderlich, daß die Anforderungen an die Haftfestigkeit zwischen Unterlage und Zink-haltiger Beschichtung, zwischen Zink-haltiger Beschichtung und Vorbehandlungsschicht, zwischen Vorbehandlungsschicht und Schweißprimerschicht sowie zwischen Schweißprimerschicht und Klebeschicht auch mindestens genau so hoch sind wie bei der 1. Generation der Schweißprimer, wobei die 1. Generation der Schweißprimer oft dünner aufgetragen wird (2,5 bis 3 µm, aber dann frei von elektrisch leitfähigen, harten Partikeln) als die absehbare 2. Generation der Schweißprimer aus Gründen der hohen Korrosionsanforderungen und mit der Schichtdicke auch die Haftfestigkeitsanforderungen wachsen. 4.) Außerdem wäre es vorteilhaft, wenn der Schweißprimer sich auch bei anderen Arten des Schweißens anstelle des Widerstandsschweißens hervorragend bewähren würde, da auch am Einsatz alternativer Schweißtechnik intensiv gearbeitet wird. Hierbei wird gehofft, daß mit der 2. Generation der Schweißprimer auch die arbeitsintensive und kostspielige Hohlraumversiegelung und ggf. auch die Nahtabdichtung entfallen kann.

Außerdem ist es erforderlich, daß mit Schweißprimer beschichtete Bleche, die im Automobilbau verarbeitet werden, problemlos umgeformt werden können. Hierbei ist insbesondere ein verschleißarmes Börteln, Umbörteln, Tiefziehen oder/und Verpressen in großen Pressen erforderlich, bei dem das entsprechende Werkzeug nicht zu stark und zu schnell abgearbeitet wird und die Schweißprimerbeschichtung nicht zerstört, abgetragen, abgerissen oder ernsthaft beschädigt wird. Das betrifft insbesondere die in einer organischen Matrix eingebundenen anorganischen Anteile im Schweißprimer.

Die Publikationen des Standes der Technik zu elektrisch leitfähigen, mindestens ein Harz enthaltenden und gegebenenfalls schweißbaren Beschichtungen beschreiben oft den Einsatz von Graphit, Ruß, Aluminium, Nickel, Zink oder/und Ferrolegierungen wie z.B. Eisenphosphiden auf Basis von Gemischen aus FeP, Fe₂P und offenbar nicht vermeidbaren Verunreinigungen. Üblicherweise wird bei den Eisenphosphiden von Ferrophos^{®}-Pulvern der Occidental Chemical Corp. (=OxyChem, vormals Hooker Chem. and Plastics Corp.) ausgegangen, bei denen die Qualitäten HRS 2132 bzw. HRS 3095 eine mittlere Partikelgröße von 3,3 µm bzw. 2,8 µm nach Herstellerangaben aufweisen, aber einen erheblichen Anteil Überkorn enthalten, der an dem Partikelgrößendurchgangswert d₉₉ von 16 µm bzw. 12 µm erkennbar ist. Alle der Anmelderin bekannten Publikationen, die Eisenphosphid als Zusatz für Beschichtungsgemische benennen, gehen von diesen Ferrophos^{®}-Pulvern aus. Diese Pulverqualitäten werden offensichtlich bei allen diesen Publikationen ungemahlen eingesetzt, denn Mahlungen werden bestenfalls in einem Gemisch aus mindestens drei Komponenten vorgenommen, wobei oft das Untermischen im Vordergrund steht, aber die Korngrößen kaum oder gar nicht verringert werden sollten. Die Mahlungen für die Herstellung von Lacken und ähnlichen Beschichtungen sind bekanntermaßen oft nur Mischverfahren oder vergleichsweise schwache Mahlungen, zumal sie meistens in einer organischen Suspension mit einem vergleichsweise geringen Eisenphosphidgehalt vorgenommen werden. Da Eisenphosphide hart und spröde sind, erfordern sie eine kräftige Mahlung ohne Anwesenheit jeglicher oder in Anwesenheit von möglichst wenigen, die Mahlwirkung beeinträchtigenden Substanzen. Außerdem ist die Mahlung von feinteiligen Phosphiden nicht ungefährlich.

US 6,008,462 lehrt flüssige Beschichtungszusammensetzungen für schweißbare, Seewasser-feste Primer mit einem Gehalt an metallischen Eisenpartikeln. In der Beschreibungseinleitung dieser Patentschrift werden Probleme beschrieben, die bei der Verwendung von Eisenphosphiden in Primerbeschichtungen auftreten und die ähnlich auch in US 5,260,120 angeführt werden: Hierzu gehören die außerordentlich abrasive Wirkung der Eisenphosphidpartikel bei Werkzeugen und der hohe Reibungskoeffizient derartiger Beschichtungen. Diese Probleme werden in diesen Publikationen gelöst, indem Eisenpartikel anstelle von Eisenphosphidpartikeln in der Primerbeschichtung eingesetzt werden oder indem zusätzlich auf die Eisenphosphidpartikel enthaltende Beschichtung ein dünner polymerer Topcoat aufgebracht wird, der die Schweißbarkeit der derart beschichteten Bleche nicht zu sehr beeinträchtigen soll.

US 4,889,773 beschreibt Elektroden zum Widerstandsschweißen, die eine Beschichtung aus Binder und mindestens einem Phosphid, vorzugsweise auf Basis von Eisenphosphiden. Diese Beschichtung zielt nicht auf die hohen Anforderungen von Schweißprimer-Beschichtungen.

US 4,110,117 lehrt Zink, aliphatische Polyolsilicate und teilweise auch Eisenphosphid enthaltende Beschichtungszusammensetzungen.

US 4,011,088 schützt rein anorganische Beschichtungen auf Basis von Eisenphosphid- oder/und Nickelphosphidpartikeln, die in wasserlöslichem Silicatbinder eingebettet sind.

WO 96/29372 betrifft Zusammensetzungen, die neben Bindeharz Zink, Graphit und ggf. weitere Komponenten wie z.B. Eisenphosphid enthalten.

Bei der rasterelektronenmikroskopischen Untersuchung von Schweißprimer-Beschichtungen auf metallischen Substraten, bei denen die Schweißprimer-Beschichtung weniger als 9 µm haben soll, ist es aufgefallen, daß Eisenphosphid-Überkorn nicht nur zu einer inhomogen erscheinenden Beschichtung führt, sondern auch störende, hoch aus der Beschichtung herausragende Spitzen bildet und beim Umformen zu starkem Verschleiß Anlaß gibt. Erste Umformversuche unter Einsatz von ungemahlen zugesetzten Eisenphosphid-Pulverqualitäten zeigten einen erheblichen Abrieb und eine mangelnde Eignung zum Umformen in der Serienfertigung.

Es bestand daher die Aufgabe, Beschichtungen vorzuschlagen, die für die verschleißarme Umformung z.B. von Stahlblechen, wie sie beispielsweise in der Automobilindustrie verarbeitet werden, in der Serienfertigung geeignet sind. Diese Beschichtungen sollen trotz der ein- oder sogar beidseitigen Beschichtung z.B. 1.) mit Zink oder einer Zink-haltigen Legierung, 2.) mit einer dünnen Vorbehandlungsschicht, die einen Korrosionsschutz sowie einen Haftgrund für den nachfolgenden Primer darstellt, und 3.) mit einer 0,5 bis 10 µm dicken Schweißprimer-Beschichtung ausreichend elektrisch leitfähig sein, um gut schweißbar zu sein. Das Verfahren zum Herstellen der Schweißprimer-Beschichtung soll außerdem möglichst einfach, serientauglich und kostengünstig sein.

Die Aufgabe wird gelöst mit einem Gemisch zum Aufbringen eines polymeren, korrosionsbeständigen, verschleißarm umformbaren und elektrisch leitfähigen Überzugs auf eine Unterlage, insbesondere auf eine metallische Unterlage wie z.B. ein Stahlblech, wobei die Unterlage gegebenenfalls z.B. mit mindestens einer Zinkschicht oder/und einer Zink-haltigen Legierungsschicht oder/und mit mindestens einer Vorbehandlungschicht vorbeschichtet sein kann, wobei das Gemisch neben mindestens einer Substanz A in Form von elektrisch leitfähigen, harten Partikeln mindestens eine Substanz B in Form von sehr weichen oder weichen, anorganischen, gleitfähigen, elektrisch leitfähigen oder halbleitenden Partikeln wie z.B. Graphit oder/und mindestens eine Substanz C in Form von metallischen, weichen oder harten, elektrisch leitfähigen oder halbleitenden Partikeln oder/und Ruß sowie mindestens ein Bindemittel und jeweils mindestens einen Vernetzer oder/und einen Photoinitiator sowie gegebenenfalls auch jeweils mindestens eine nachvernetzende Verbindung, ein Additiv, ein Korrosionsschutzpigment D, einen nicht in Partikelform vorliegenden Korrosionsinhibitor, ein organisches Lösemittel oder/und Wasser enthält, wobei A, B und C wasserunlösliche oder schwer wasserlösliche Pigmente sind, wobei die Summe der Gewichtsanteile der anorganischen, gleitfähigen Partikel B und der metallischen Partikel oder/und Ruß C 0,25 bis 95 % der Gewichtsanteile an wasserunlöslicher bzw. schwer wasserlöslicher Pigmentierung Σ (A + B + C) ausmacht und wobei die Größe der elektrisch leitfähigen, harten Partikel A bezogen auf den Durchgangswert d₉₉ gemessen mit einem Mastersizer vom Typ S der Fa. Malvern Instruments weniger als 10 µm beträgt. Basis ist eine Präparation der Suspension, wie sie bei den Beispielen und Vergleichsbeispielen beschrieben wird.

Der Gegenstand der Patentanmeldungen DE 102 47 691 und DE 102 56 286 wird bezüglich der Angaben zu Beispielen, Vergleichsbeispielen, Prüftechniken, Partikelbezogenen Angaben wie z.B. Art, Größe, Größenverteilungen und Eigenschaften, sowie zu Eigenschaften und Zusammensetzungen der Gemische und Beschichtungen sowie zu Beschichtungen und Verfahrensschritten ausdrücklich in diese Anmeldung einbezogen.

Die Unterlage kann insbesondere eine aus Stahl, aus Edelstahl, aus mindestens einer Aluminium- oder/und Magnesiumlegierung sein, wobei es sich um Bleche, Platten, Stangen bzw. kompliziert geformte Teile oder bereits gefügte Komponenten handeln kann. Vorzugsweise handelt es sich um Bleche aus einer Aluminiumlegierung oder Stahl.

Der Überzug kann in beliebigem Umfang auf die Unterlage aufgebracht werden, z.B. nur auf eine oder auf beide Seiten z.B. eines Bleches, gegebenenfalls einschließlich mindestens einer Kante oder aber nur in bestimmter Breite oder in bestimmtem Muster, so daß z.B. Randbereiche hiermit unbeschichtet bleiben können.

Die elektrisch leitfähigen, harten Partikel A sind wasserunlöslich oder schwer wasserlöslich. Sie dienen unter anderem als Barrierepartikel, ohne selber besonders korrosionsbeständig sein zu müssen. Dennoch ist es bevorzugt, daß die Partikel A chemisch etwas stabiler oder/und stärker korrosionsbeständig sind, insbesondere gegenüber Wasser und schwach basischen Medien.

Die elektrisch leitfähigen, harten Partikel A sind insbesondere ausgewählt aus solchen auf Basis von Borid, Carbid, Oxid, Phosphid, Phosphat, Silicat oder/und Silicid. Sie sind vorzugsweise derartige Verbindungen auf Basis von Aluminium, Chrom, Eisen, Kalzium, Magnesium, Mangan, Nickel, Kobalt, Kupfer, Lanthan, Lanthanid, Molybdän, Niob, Tantal, Titan, Vanadium, Wolfram, Yttrium, Zink, Zinn oder/und Zirkonium. Ihre elektrische Leitfähigkeit kann gegebenenfalls wesentlich auf einem besonderen Dotierungszusatz oder/und Gehalt an einer weiteren, besser elektrisch leitfähigen Phase oder/und an einer besser elektrisch leitfähigen Beschichtung beruhen. Besonders bevorzugte Substanzen sind Eisenphosphat, Manganphosphat, Nickelphosphat, Zinkphosphat oder/und weitere Phosphate auf Basis von Aluminium, Eisen, Kupfer, Mangan, Nickel, Zink oder/und weiteren Übergangsmetallen, Phosphide auf Basis von Eisen, Mangan, Molybdän, Nickel, Titan, Zirkonium oder/und gegebenenfalls weiteren Übergangsmetallen, Boride auf Basis von Titan oder/und anderen Übergangsmetallen, Carbide erhöhter elektrischer Leitfähigkeit wie z.B. Siliciumcarbid mit besonders hoher elektrischer Leitfähigkeitbzw. Silicide wie z.B. auf Basis von Molybdän oder/und anderen Übergangsmetallen.

Besonders bevorzugt sind hierbei Oxide hoher elektrischer Leitfähigkeit, insbesondere Oxide mit einer Strukturchemie auf Basis von mindestens einem Spinell wie z.B. Fe₃O₄ oder (Cu,Fe,Mn,Ni,Ti,Zn)₃O₄, auf Basis von mindestens einem Oxid mit einem unterstöchiometrischen Sauerstoffgehalt und von vergleichsweise hoher elektrischer Leitfähigkeit wie z.B. SnO₂₋ₓ oder TiO₂₋ₓ mit x z.B. im Bereich von 0,02 bis 0,25 bzw. auf Basis von mindestens einem Phosphid, das insbesondere durch Wasser und verdünnte Säuren nur wenig oder nicht angegriffen werden kann und eine höhere elektrische Leitfähigkeit aufweist. Der Graphit ist vorzugsweise mikrokristallin und weist insbesondere mehr als 97,0 Gew.-% C auf.

Bei dem erfindungsgemäßen Gemisch können die elektrisch leitfähigen, harten Partikel A Substanzen auf Basis von Verbindungen bzw. Gemischen von Verbindungen mit oder von Spinellen wie z.B. Fe₃O₄, Mn₃O₄, FeMn₂O₄ oder/und weiteren Substanzen auf Basis von Boriden, Carbiden, Oxiden, Phosphaten, Phosphiden, Silicaten, Siliciden insbesondere von Übergangsmetallen bzw. elektrisch leitfähig beschichteten Partikeln oder/und deren Mischung bzw. deren gemeinsamer Verbindung, und gegebenenfalls weitere metallische Partikel oder/und Ruß C enthalten ausgewählt aus Aluminium, Eisen, Kobalt, Kupfer, Molybdän, Nickel, Niob, Silber, Tantal, Titan, Vanadium, Wolfram, Zink, Zinn, Aluminium-, Eisen-, Kobalt-, Kupfer-, Molybdän-, Nickel-, Niob-, Silber-, Tantal-, Titan-, Vanadium-, Wolfram-, Zink- oder/und Zinn-haltigen Legierungen, insbesondere Oxide im wesentlichen auf Basis von Spinellen vorzugsweise von Aluminium, Chrom, Eisen, Kobalt, Kupfer, Magnesium, Mangan, Nickel, Vanadium, Titan oder/und Zink oder/und im wesentlichen auf Basis von elektrisch leitfähigen Oxiden mit unterstöchiometrischem Sauerstoffgehalt wie z.B. TiO_{1,95}, oder/und insbesondere Phosphide im wesentlichen auf Basis von Aluminium, Eisen, Kobalt, Kupfer, Mangan, Molybdän, Nickel, Niob, Tantal, Titan, Vanadium, Wolfram, Zink oder/und Zinn, insbesondere auf Basis von Phosphiden, vorzugsweise auf Basis von Eisen-, Mangan-, Nickel- oder/und Zinn-haltigen Phosphiden. Als elektrisch leitfähig beschichtete Partikel sind insbesondere solche geeignet, die eine elektrische Leitfähigkeit von mindestens von metallischem Zink aufweisen, insbesondere mit Graphit, Ruß, einer sonstigen Kohlenstoffart, elektrisch leitfähigem Metall, Eisenoxid, Antimon- oder/und Zinnverbindung(en) beschichtete Partikel.

Bei dem erfindungsgemäßen Gemisch kann die Summe der Gewichtsanteile der anorganischen, gleitfähigen Partikel B und der metallischen Partikel oder/und Ruß C vorzugsweise 0,8 bis 98 % der Gewichtsanteile an wasserunlöslicher bzw. schwer wasserlöslicher Pigmentierung Σ (A + B + C) ausmachen, besonders bevorzugt mindestens 1,5 % bzw. mindestens 4,5 %, ganz besonders bevorzugt mindestens 8 % bzw. mindestens 14 %, insbesondere mindestens 26 % bzw. besonders bevorzugt höchstens 96 % bzw. höchstens 90 %, ganz besonders bevorzugt höchstens 84 % bzw. höchstens 78 %, insbesondere höchstens 66 %. Andererseits kann es bei einer anderen grundsätzlichen Art der Ausgestaltung der Kombination der verschiedenen Partikeltypen auch vorteilhaft sein, wenn die Summe der Gewichtsanteile der anorganischen, gleitfähigen Partikel B und der metallischen Partikel oder/und Ruß C vorzugsweise 0,8 bis 98 % der Gewichtsanteile an wasserunlöslicher bzw. schwer wasserlöslicher Pigmentierung Σ (A + B + C) höchstens 50 % ausmacht, vorzugsweise höchstens 44 %, besonders bevorzugt höchstens 36 % bzw. höchstens 28 %, ganz besonders bevorzugt höchstens 22 % bzw. höchstens 16 %, insbesondere höchstens 12 %. Je geringer der Anteil der elektrisch leitfähigen, harten Partikel A im Gemisch ist, desto eher ist es bevorzugt, besser elektrisch leitfähige Partikel A einzusetzen.

Bei dem erfindungsgemäßen Gemisch können vorzugsweise mindestens 30 Gew.-%, vorzugsweise mindestens 45 Gew.-%, besonders bevorzugt mindestens 60 Gew.-%, insbesondere mindestens 75 Gew.-%, vor allem mindestens 90 Gew.-% der elektrisch leitfähigen, harten Partikel A Oxide oder/und Phosphide im wesentlichen auf Basis von Aluminium, Eisen, Kobalt, Kupfer, Mangan, Molybdän, Nickel, Niob, Tantal, Titan, Vanadium, Wolfram, Zink oder/und Zinn sein, einschließlich unterstöchiometrisch Sauerstoff enthaltenden Oxiden mit erhöhter elektrischer Leitfähigkeit, insbesondere Oxide oder/und Phosphide auf Basis von Eisen-, Mangan-, Nickel- oder/und Zink-haltigen Verbindungen bzw. deren Gemische.

Vorzugsweise beträgt der Anteil der elektrisch leitfähigen, harten Partikel A auf Basis von Borid, Carbid, Phosphat, Silicat und Silicid nicht mehr als 60 Gew.-% aller elektrisch leitfähigen, harten Partikel A, besonders bevorzugt nicht mehr als 45 Gew.-%, ganz besonders bevorzugt nicht mehr als 30 Gew.-%, insbesondere nicht mehr als 15 Gew.-%. Jedoch kann es bevorzugt sein, den Anteil an Eisenoxidpigment, insbesondere wie es in der Lackindustrie bekannt ist, auf Gehalte von bis zu 20 Gew.-%, besonders bevorzugt auf bis zu 10 Gew.-%, ganz besonders bevorzugt auf bis zu 5 Gew.-%, insbesondere gar keine solchen Pigmentgehalt, einzustellen.

Die mindestens eine Substanz oder mindestens eine von mehreren Substanzen aus der Kategorie der elektrisch leitfähigen, harten Partikel A weist im massiven Zustand bei Raumtemperatur vorzugsweise einen elektrischen Widerstand von höchstens 100 Ω•cm, besonders bevorzugt von höchstens 50 Ω•cm, ganz besonders bevorzugt von höchstens 5 Ω•cm auf, insbesondere einen elektrischen Widerstand nicht größer als der von handelsüblichem pulverigen metallischen Zink, vor allem einen elektrischen Widerstand nicht größer als der von handelsüblichen Eisenphosphidgemischen auf Basis FeP und Fe₂P einschließlich Verunreinigungen.

Die mindestens eine Substanz oder mindestens eine von mehreren Substanzen aus der Kategorie der elektrisch leitfähigen, harten Partikel A weist eingebettet als feine Partikel verteilt in einer polymeren Matrix auf Basis von Epoxid im Gewichtsverhältnis Partikel A : Polymer von 90 : 10 als Preßling von ca. 25 mm Durchmesser und von 3 mm Höhe bei Raumtemperatur vorzugsweise einen elektrischen Durchgangswiderstand von höchstens 200 Ω•cm, besonders bevorzugt von höchstens 100 Ω•cm, ganz besonders bevorzugt von höchstens 25 Ω•cm auf, insbesondere einen elektrischen Widerstand nicht größer als der bei Verwendung von handelsüblichem pulverigen metallischen Zink anstelle von Partikeln A, vor allem einen elektrischen Widerstand nicht größer als der von handelsüblichen Eisenphosphidgemischen auf Basis FeP und Fe₂P einschließlich Verunreinigungen als Partikel A.

Die elektrisch leitfähigen, harten Partikel A brauchen jedoch keine hochwertigen Gleiteigenschaften aufzuweisen. Sie zeigen eine Härte nach Moh's gemessen an großen Kristallen oder kompakten Komponenten von mindestens 5,5.

Bei allen Partikelgrößenbestimmungen ab 0,3 µm mittlerer Partikelgröße ist von Verteilungen gemessen mit einem Mastersizer vom Typ S der Fa. Malvern Instruments auszugehen. Die Suspension mit den zu messenden Partikeln wurde hierbei entsprechend den Angaben in den Beispielen und Vergleichsbeispielen vorbereitet. Bei Bestimmungen unter 0,3 µm mittlerer Größe sind bevorzugt Messungen bzw. Auswertungen an Fotos heranzuziehen, die mit einem Rasterelektronenmikroskop an auf einem Träger gut verteilten Teilchen gewonnen werden. Hierbei sollen die Partikel bei stärker als Agglomerate erkennbaren Anlagerungen getrennt als viele Einzelteilchen und nicht als einzelne Agglomerate gezählt und mindestens 400 Partikel berücksichtigt werden, um näherungsweise Verteilungen ermitteln zu können.

Vorzugsweise beträgt der Durchgangswert d₉₉ der elektrisch leitfähigen, harten Partikel A nicht mehr als 8 µm, besonders bevorzugt nicht mehr als 7 µm, ganz besonders bevorzugt nicht mehr als 6 µm, vor allem nicht mehr als 5 µm. Vorteilhafterweise liegt der Durchgangswert d₉₉ der elektrisch leitfähigen, harten Partikel A im Bereich von 0,5 bis 6,5 µm, besonders bevorzugt im Bereich von mindestens 1,5 µm bzw. bis zu 5,5 µm, ganz besonders bevorzugt im Bereich von mindestens 2,0 µm bzw. bis zu 4,5 µm, vor allem im Bereich von mindestens 2,5 µm bzw. bis zu 4,0 µm.

Bei dem erfindungsgemäßen Gemisch kann die Mischung aus allen Arten von elektrisch leitfähigen, harten Partikeln A insbesondere eine mittlere Partikelgröße d₅₀ von nicht mehr als 2,6 µm oder nicht mehr als 2,2 µm oder/und im Bereich von 0,1 bis 2,5 µm aufweisen, ganz besonders im Bereich von 0,2 bis 2 µm. Vorzugsweise liegt sie in einem Bereich bis 1,8 µm, besonders bevorzugt in einem Bereich bis 1,6 µm, ganz besonders bevorzugt in einem Bereich bis 1,4 µm bzw. vorzugsweise in einem Bereich von mindestens 0,5 µm. Als Teilchenform der elektrisch leitfähigen Partikel sind Plättchen oder linealförmige Partikel bevorzugt, aber auch im wesentlich isometrisch geformte Partikel können vorteilhaft sein.

Vorteilhafterweise beträgt die Größe der elektrisch leitfähigen, harten Partikel A bezogen auf den Durchgangswert d₁₀ nicht mehr als 1,5 µm, insbesondere nicht mehr als 1,2 µm, ganz besonders bevorzugt nicht mehr als 0,8 µm.

Bei dem erfindungsgemäßen Gemisch kann die Mischung aus allen Arten von elektrisch leitfähigen, harten Partikeln A vorzugsweise eine steile Partikelgrößenverteilung aufweisen, bei der der Durchgangswert d₉₉ zum Durchgangswert d₁₀ höchstens den Faktor 12 aufweist. Dieser Faktor beträgt insbesondere höchstens den Faktor 11, besonders bevorzugt von höchstens 10, ganz besonders bevorzugt von höchstens 9, vor allem von höchstens 8.

Bei dem erfindungsgemäßen Verfahren werden die elektrisch leitfähigen, harten Partikel A vorzugsweise allein für sich vermahlen. Das Vermahlen kann hierbei für jede Partikelart A getrennt oder in Teilgemischen oder in einer Gesamtmischung aus allen Arten von Partikeln A erfolgen. Bei dem erfindungsgemäßen Verfahren kann beim Mahlen der elektrisch leitfähigen, harten Partikel A vorwiegend das Überkorn zerkleinert werden, so daß eine engere Partikelgrößenverteilung entsteht. Eine steile Partikelgrößenverteilung der harten Pulver A, die einen hohen Anteil der Pigmentierung ausmachen, trägt wesentlich zu einer gleichmäßigen Partikelverteilung innerhalb der fertigen Beschichtung bei. Besonders vorteilhaft ist es, wenn durch das Mahlen der elektrisch leitfähigen, harten Partikel A eine engere Partikelgrößenverteilung eingestellt wird, insbesondere dann, wenn die feinsten Teilchen kaum zerkleinert werden oder wenn das Pulver hierbei nicht zu Staub vermahlen wird. Besonders bevorzugt ist es, nur bei den Partikelarten der elektrisch leitfähigen, harten Partikel A die Partikelgrößenverteilung auf eine engere Verteilung durch Mahlen einzustellen, bei denen die mittlere Partikelgröße größer als 1 µm, ganz besonders bevorzugt größer als 2 µm ist. Falls ein Gemisch aus verschiedenen elektrisch leitfähigen, harten Partikeln A vorliegen sollte, kann es von Interesse sein, entweder nur das Gemisch oder/und die einzelnen Partikelqualitäten getrennt zu mahlen. Die Mahlung dieser Partikel oder dieses Partikelgemisches A ist vorzugsweise besonders stark, insbesondere unter Einsatz von speziellen Mahlaggregaten. Hierbei kann es von Interesse sein, ein Mahlaggregat auszuwählen, das in der Lackindustrie normalerweise nicht eingesetzt wird, weil in der Lackindustrie meistens nur relativ schwach, nämlich üblicherweise nur ein Gemisch aus weichen oder/und harten Stoffen bzw. ein Gemisch aus polymeren oder/und anorganischen Stoffen, die nicht unbedingt in Partikelform vorliegen, gemahlen wird und die Mahlbedingungen für harte Partikel schon von daher relativ schwach sind.

Falls mehr als jeweils eine Pulverqualität pro Pigmentkategorie insbesondere bei Pigment A, bei einem harten Pigment C oder/und bei einem Pigment D vorliegen sollte, weist die einzelne Pulverqualität vorzugsweise eine mittlere Partikelgröße auf, die etwa in der Größenordnung der mittleren Partikelgröße d₅₀ des bzw. aller Arten des Pigments A liegt (d₅₀ ± 1 µm) oder geringfügig kleiner ist (bis d₅₀ - 1 µm). Vorzugsweise weist das ggf. vorhandene mindestens eine Korrosionsschutzpigment D eine mittlere Partikelgröße auf, die ebenfalls etwa in der Größe der mittleren Partikelgröße d₅₀ des Pigments A (d₅₀ ± 1 µm) oder geringfügig darunter liegt (bis d₅₀ - 1 µm). Auch diese Eigenschaften können wesentlich zur Einstellung einer gleichmäßigen Partikelverteilung innerhalb der fertigen Beschichtung beitragen.

Bei dem erfindungsgemäßen Gemisch kann vorzugsweise der Anteil an elektrisch leitfähigen, harten Partikeln A im Gemisch 10 bis 80 Gew.-% oder/und der Anteil an gleitfähigen, sehr weichen oder weichen Partikeln B im Gemisch 0,1 bis 16 Gew.-% jeweils bezogen auf das Gewicht des Feststoffs im Naßlack (alle Feststoffe = 100 Gew.-%) betragen. Vorzugsweise beträgt der Anteil an elektrisch leitfähigen, harten Partikeln A hierbei mindestens 12 Gew.-% bzw. höchstens 70 Gew.-% bezogen auf das Gewicht des Feststoffs im Naßlack, besonders bevorzugt mindestens 15 Gew.-% bzw. höchstens 65 Gew.-%, ganz besonders bevorzugt mindestens 20 Gew.-% bzw. höchstens 60 Gew.-%. Bei einem hohen Anteil an elektrisch leitfähigen, harten Partikeln A im Gemisch wird ein härterer, festerer, elektrisch leitfähigerer und meistens auch chemisch stabilerer Überzug erreicht, während mit einem niedrigen Anteil an elektrisch leitfähigen, harten Partikeln A im Gemisch eher ein weicherer, weniger fester, u.U. schwächer elektrisch leitfähiger Überzug erzielt wird.

Vorzugsweise beträgt der Anteil an gleitfähigen, sehr weichen oder weichen Partikeln B hierbei mindestens 0,2 Gew.-% bzw. höchstens 12 Gew.-% bezogen auf das Gewicht des Feststoffs im Naßlack, besonders bevorzugt mindestens 0,3 Gew.-% bzw. höchstens 8 Gew.-%, ganz besonders bevorzugt mindestens 0,5 Gew.-% bzw. höchstens 6 Gew.-%. Vorzugsweise beträgt der Gehalt an Sulfiden, Seleniden und Telluriden im Gemisch nicht mehr als 5 Gew.-% bzw. besonders bevorzugt nicht mehr als 3,5 Gew.-%, ganz besonders bevorzugt nicht mehr als 2,5 Gew.-%, bezogen auf das Gewicht des Feststoffs im Naßlack. Falls diese Substanzen weniger korrosionsbeständig sein sollten, sollte ihr Gehalt nicht zu hoch sein. Bei einem hohen Anteil an gleitfähigen, sehr weichen oder weichen Partikeln B im Gemisch wird ein sehr gut gleitfähiger, flexibler, weicherer Überzug gebildet, während mit einem besonders niedrigen Anteil an gleitfähigen, sehr weichen oder weichen Partikeln B im Gemisch ein härterer, festerer und meistens besser elektrisch leitfähiger Überzug eingestellt wird.

Die anorganischen, gleitfähigen Partikel B sind vorzugsweise solche mit sehr guten Gleiteigenschaften. Sie sind wasserunlöslich oder schwer wasserlöslich. Sie weisen vorzugsweise Partikel mit im wesentlichen flächiger (Plättchen) oder länglicher Ausdehnung (Nadeln, Lineale) oder/und im wesentlichen entsprechende Aggregate auf. Insbesondere sind es solche auf Basis von Graphit oder/und Chalkogenid wie Sulfid, Selenid bzw. Tellurid, besonders von Graphit, Antimon-haltigem, Manganhaltigem, Molybdän-haltigem, Wismut-haltigem, Wolfram-haltigem oder/und Zinn-haltigem Chalkogenid, vor allem von Mangansulfid, Molybdändisulfid, Wolframdisulfid oder/und Zinnsulfid bevorzugt. Sie können auch z.B. mit Kohlenstoff bzw. Graphit beschichtet sein. Bei dem erfindungsgemäßen Gemisch können sie vorwiegend oder gänzlich aus Graphit, Sulfid, Selenid oder/und Tellurid bestehen, insbesondere aus Graphit, Antimon-haltigem Sulfid, Zinn-haltigem Sulfid, Molybdänsulfid oder/und Wolframsulfid.

Bei dem erfindungsgemäßen Gemisch kann die Mischung aus allen Arten von gleitfähigen, sehr weichen oder weichen Partikeln B bei der Zugabe zu dem Gemisch einen Partikelgrößendurchgangswert d₉₉ in einem Bereich von 1 bis 30 µm aufweisen, insbesondere in einem Bereich von mindestens 4 µm bzw. bis 25 µm, vorzugsweise in einem Bereich bis 22 µm, besonders bevorzugt in einem Bereich bis 20 µm bzw. vorzugsweise in einem Bereich von mindestens 12 µm, besonders bevorzugt in einem Bereich von mindestens 14 µm. Vorzugsweise ist der Durchgangswert d₉₉ der Partikel B deutlich größer als der Durchgangswert D₉₉ der Partikel A, insbesondere um den Faktor 1,2 bis 10 größer, vorzugsweise um den Faktor 1,5 bis 8, besonders bevorzugt um den Faktor 2 bis 7. Vielfach schauen die Partikel B, wenn Sie bis zum Auftragen der Beschichtung nicht stärker mechanisch beansprucht werden, zu einem gewissen Anteil aus der Beschichtung heraus und können bei der mechanischen Beanspruchung der Beschichtung wie z.B. beim Reiben oder Umformen schnell zerkleinert werden, wobei diese Partikel als Schmiermittel allein für sich oder in Kombination mit gegebenenfalls vorhandenen Anteilen an Öl wie z.B. Tiefziehöl helfen.

Bei dem erfindungsgemäßen Gemisch kann die Mischung aus allen Arten von gleitfähigen, sehr weichen oder weichen Partikeln B bei der Zugabe zu dem Gemisch eine mittlere Partikelgröße d₅₀ im Bereich von 0,1 bis 20 µm aufweisen, vorzugsweise in einem Bereich bis 18 µm, besonders bevorzugt in einem Bereich bis 15 µm, ganz besonders bevorzugt in einem Bereich bis 12 µm bzw. vorzugsweise in einem Bereich von mindestens 1 µm, besonders bevorzugt in einem Bereich von mindestens 3 µm, ganz besonders bevorzugt in einem Bereich von mindestens 5 µm. Als Teilchenform der gleitfähigen, sehr weichen oder weichen Partikel B sind Plättchen bevorzugt. Bei dem erfindungsgemäßen Gemisch kann die mittlere Partikelgröße d₅₀ der gleitfähigen, sehr weichen oder weichen Partikel B bei der Zugabe zu dem Gemisch um den Faktor 1,5 bis 7 größer sein als die mittlere Partikelgröße d₅₀ der elektrisch leitfähigen, harten Partikel A, vorzugsweise um den Faktor 2 bis 6 größer, besonders bevorzugt um den Faktor 3 bis 5 größer.

Der kristalline Graphit wird hierbei zu den Partikeln B, die übrigen Kohlenstoffarten werden wie insbesondere die verschiedensten Ruße zu den Partikeln C aufgrund der meistens zu Graphit etwas unterschiedlichen Eigenschaften der Ruße gerechnet.

Die metallischen Partikel C sind vorzugsweise ausgewählt aus Aluminium, Eisen, Kobalt, Kupfer, Mangan, Molybdän, Nickel, Niob, Tantal, Titan, Wolfram, Zink, Zinn, Zirkonium oder/und mindestens einer mindestens ein solches Metall enthaltenden intermetallischen Verbindung bzw. Legierung wie z.B. Ferrolegierungen wie u.a. FeCr, FeMn, FeSi bzw. FeTi, Stahl, Bronze bzw. Messing. Sie sind wasserunlöslich oder besonders schwer wasserlöslich. Vorteilhafterweise weisen sie eine geringe Härte und hohe Duktilität auf.

Vorteilhafterweise sind keine oder keine größeren Mengen (≤ 5 Gew.-%) an elektrisch leitfähigen Partikeln aus Metallen oder/und Legierungen oder/und gegebenenfalls auch an Ruß C vorhanden. Vorzugsweise ist der Anteil an gleitfähigen, sehr weichen oder weichen Partikeln B in dem Gemisch gleich groß oder größer als der Anteil an Metallen bzw. Legierungen oder/und Ruß C.

Bei dem erfindungsgemäßen Gemisch kann die Mischung aus allen Arten von metallischen Partikeln oder/und Ruß C bei der Zugabe zu dem Gemisch einen Partikelgrößendurchgangswert d₉₉ im Bereich von 0,05 bis 20 µm aufweisen, insbesondere im Bereich von 0,1 bis 15 µm, vorzugsweise in einem Bereich bis 12 µm, besonders bevorzugt in einem Bereich bis 10 µm bzw. vorzugsweise in einem Bereich von mindestens 0,5 µm, besonders bevorzugt in einem Bereich von mindestens 0,8 µm.

Bei dem erfindungsgemäßen Gemisch kann die Mischung aus allen Arten von metallischen Partikeln oder/und Ruß C bei der Zugabe zu dem Gemisch eine mittlere Partikelgröße d₅₀ im Bereich von 0,01 bis 10 µm aufweisen, vorzugsweise in einem Bereich bis 8 µm, besonders bevorzugt in einem Bereich bis 5 µm, ganz besonders bevorzugt in einem Bereich bis 4 µm bzw. vorzugsweise in einem Bereich von mindestens 0,1 µm, besonders bevorzugt in einem Bereich von mindestens 0,3 µm, ganz besonders bevorzugt in einem Bereich von mindestens 0,5 µm. Als Teilchenform der metallischen Partikel oder/und Ruß C sind ebenfalls Plättchen bevorzugt. Hierbei können auch Nanopartikel eingesetzt werden.

Bei dem erfindungsgemäßen Gemisch kann die mittlere Partikelgröße d₅₀ der metallischen Partikel oder/und Ruß C bei der Zugabe zu dem Gemisch um den Faktor 0,1 bis 4 größer sein als die mittlere Partikelgröße d₅₀ der elektrisch leitfähigen, harten Partikel A, vorzugsweise um den Faktor 2 bis 6 größer, besonders bevorzugt um den Faktor 3 bis 5 größer.

Bei dem erfindungsgemäßen Gemisch kann der Anteil an metallischen Partikeln oder/und Ruß C im Gemisch 0 bis 75 Gew.-% bezogen auf das Gewicht des Feststoffs im Naßlack betragen. Vorzugsweise beträgt dieser Anteil mindestens 0,1 Gew.-% bzw. höchstens 70 Gew.-% bezogen auf das Gewicht des Feststoffs im Naßlack, besonders bevorzugt mindestens 1 Gew.-% bzw. höchstens 65 Gew.-%, ganz besonders bevorzugt mindestens 2 Gew.-% bzw. höchstens 60 Gew.-%. Bei einem hohen Anteil an metallischen Partikeln bzw. Ruß C im Gemisch wird meistens ein weicherer, oft schwächer elektrisch leitfähiger und meistens auch weniger chemisch stabiler Überzug ausgebildet, während mit einem besonders niedrigen Anteil an metallischen Partikeln bzw. Ruß C im Gemisch oft ein härterer, festerer, meistens elektrisch leitfähigerer und vielfach chemisch stabilerer Überzug erzielt wird.

Im Gegensatz hierzu können die Korrosionschutzpigmente D eine begrenzte Wasserlöslichkeit oder/und wasserlösliche Anteile aufweisen. Außerdem ist es bevorzugt, daß insbesondere bei Anwesenheit von Phosphid auch mindestens ein anorganischer oder/und organischer Korrosionsinhibitor eingesetzt wird, wobei aber auch mindestens ein Korrosionsschutzpigment D hierfür ausreichend sein kann. Besonders bevorzugt ist ein Korrosionsschutzpigment D auf Basis von Phosphaten wie z.B. Aluminium-, Erdalkali- oder Zinkphosphat, oder/und auf Basis von Erdalkalicarbonat, Erdalkalisilicat oder/und Erdalkaliphosphosilicat. Besonders bevorzugt ist ein Korrosionsinhibitor auf Basis von Amiden, Aminen, Butansäurederivaten, Imiden oder/und Iminen. Die Korrosionsschutzpigmente D und die Korrosionsinhibitoren sind grundsätzlich bekannt.

Bei dem erfindungsgemäßen Gemisch kann die Mischung aus allen Arten von Korrosionsschutzpartikeln D bei der Zugabe zu dem Gemisch einen Partikelgrößendurchgangswert d₉₉ im Bereich von 0,03 bis 10 µm aufweisen, vorzugsweise in einem Bereich bis 8 µm, besonders bevorzugt in einem Bereich bis 6 µm, ganz besonders bevorzugt in einem Bereich bis 5 µm bzw. vorzugsweise in einem Bereich von mindestens 0,1 µm, besonders bevorzugt in einem Bereich von mindestens 0,3 µm, ganz besonders bevorzugt in einem Bereich von mindestens 0,5 µm. Darüber hinaus ist es vorteilhaft, wenn der Partikelgrößendurchgangswert d₉₉ der Korrosionsschutzpartikel D nicht größer oder nicht wesentlich größer ist als der Partikelgrößendurchgangswert d₉₉ der elektrisch leitfähigen, harten Partikel A.

Bei dem erfindungsgemäßen Gemisch kann die Mischung aus allen Arten von Korrosionsschutzpartikeln D bei der Zugabe zu dem Gemisch eine mittlere Partikelgröße d₅₀ im Bereich von 0,01 bis 5 µm aufweisen, vorzugsweise in einem Bereich bis 4 µm, besonders bevorzugt in einem Bereich bis 3 µm, ganz besonders bevorzugt in einem Bereich bis 2 µm bzw. vorzugsweise in einem Bereich von mindestens 0,05 µm, besonders bevorzugt in einem Bereich von mindestens 0,1 µm, ganz besonders bevorzugt in einem Bereich von mindestens 0,3 µm. Darüber hinaus ist es vorteilhaft, wenn die mittlere Korngröße aller Arten von Korrosionsschutzpartikeln D genau so groß oder nicht wesentlich kleiner ist als die mittlere Korngröße der elektrisch leitfähigen, harten Partikel A. Es ist bevorzugt, die Korrosionsschutzpartikel D fein und homogen in dem Gemisch und dem daraus entstehenden Überzug zu verteilen. Die Korrosionsschutzpartikel D können eine Barrierewirkung für z.B. Wasserstoffionen aufbauen und verbrauchen sich bei der Korrosion nicht anders als sich opfernde Korrosionsmittel wie z.B. metallisches Mangan oder Zink. Als Teilchenform der Korrosionsschutzpigmentpartikel D sind Plättchen bevorzugt.

Insbesonders beträgt der Gehalt an Pulvern Σ (B + C) zum Gesamtgehalt der wasserunlöslichen bzw. schwer wasserlöslichen Pigmentierung Σ (A + B + C) 0,4 bis zu 65 %, vorzugsweise mindestens 1 % bzw. bis zu 60 %, besonders bevorzugt mindestens 2 % bzw. bis zu 55 %. Dabei beträgt der Gehalt an Partikeln B zum Gesamtgehalt der wasserunlöslichen bzw. schwer wasserlöslichen Pigmentierung Σ (A + B + C) insbesondere 0,25 bis 20 %, vorzugsweise mindestens 0,4 % bzw. bis zu 12 %, besonders bevorzugt mindestens 0,8 % bzw. bis zu 8 %. Dabei beträgt der Gehalt an Pulver C zum Gesamtgehalt der wasserunlöslichen bzw. schwer wasserlöslichen Pigmentierung Σ (A + B + C) insbesondere 0,25 bis 45 %, vorzugsweise mindestens 0,4 % bzw. bis zu 40 %, besonders bevorzugt mindestens 0,8 % bzw. bis zu 36 %.

Hierbei ist es vorteilhaft, wenn bei dem Gemisch die Summe der Gewichtsanteile der wasserunlöslichen bzw. schwer wasserlöslichen Pigmentierung Σ (A + B + C) zur Summe der gesamten Pigmentierung Σ (A + B + C + D) 30 bis 99 Gew.-% beträgt. Vorzugsweise beträgt sie 50 bis 98 Gew.-%, besonders bevorzugt mindestens 70 Gew.-% bzw. bis zu 97 Gew.-%, ganz besonders bevorzugt mindestens 90 Gew.-% bzw. bis zu 96 Gew.-%.

Ganz besonders bevorzugt ist ein Gemisch, bei dem der Anteil an elektrisch leitfähigen, harten Partikeln A 48 bis 68 Gew.-%, der Anteil an gleitfähigen, sehr weichen oder weichen Partikeln B 0,1 bis 6 Gew.-%, der Anteil an metallischen, weichen oder harten, elektrisch leitfähigen oder halbleitenden Partikeln oder/und Ruß C 0 bis 16 Gew.-% und der Anteil an Korrosionsschutzpigment D 1 bis 12 Gew.-% beträgt, jeweils bezogen auf das Gewicht des Feststoffs im Naßlack. Insbesondere bevorzugt ist ein Gemisch, bei dem der Anteil an elektrisch leitfähigen, harten Partikeln A 52 bis 62 Gew.-%, der Anteil an gleitfähigen, sehr weichen oder weichen Partikeln B 0,5 bis 4 Gew.-%, der Anteil an metallischen, weichen oder harten, elektrisch leitfähigen oder halbleitenden Partikeln oder/und Ruß C 0 bis 12 Gew.-% und der Anteil an Korrosionsschutzpigment D 2 bis 8 Gew.-% beträgt, jeweils bezogen auf das Gewicht des Feststoffs im Naßlack. Unter Umständen beträgt der Gehalt an Partikeln C mindestens 0,1 Gew.-%.

Vorzugsweise beträgt der Gesamtgehalt der Pigmentierung Σ (A + B + C + D) zum Gesamtgehalt an Feststoff im Naßlack 30 bis 90 Gew.-%, besonders bevorzugt 45 bis 85 Gew.-%, ganz besonders bevorzugt 60 bis 80 Gew.-%. Hierbei ist zu beachten, daß bei Gesamtgehalten der Pigmentierung Σ (A + B + C + D) von mehr als 80 Gew.-% eine ausreichende Elastizität der polymeren Matrix eingestellt wird, wenn stärkere Umformungen vorgesehen sind.

Die Feststoffanteile des flüssigen Gemisches bleiben vom Naßlack über den trockenen Film bis zum fertigen, daraus hergestellten vernetzten Überzugs praktisch identisch. Daher können die Feststoffanteile, des Gemisches als gleich groß angesehen werden wie im fertigen Überzug. Falls Carbonat oder ähnliche Substanzen mit gegebenenfalls flüchtigen Anteilen verwendet werden sollten, ist dies entsprechend zu berücksichtigen.

Bei dem erfindungsgemäßen Gemisch kann es vorteilhaft sein, daß ein Gehalt an organischem Gleitmittel wie z.B. Polyethylenwachs zugesetzt wird. Vorzugsweise wird das erfindungsgemäße Gemisch nicht mehr als 0,5 Gew.-% an Wachs oder/und an Substanzen mit wachsartigen Eigenschaften enthalten, insbesondere nicht mehr als 0,2 Gew.-%, bezogen auf das Trockengewicht des Naßlacks, besonders bevorzugt kein Wachs und keine Substanzen mit wachsartigen Eigenschaften. Diese Substanzen führen oft bereits bei Gehalten zwischen 0,1 und 0,5 Gew.-% zu einer Beeinträchtigung der Adhäsion bzw. Kohäsion mit nachträglich aufgebrachten Beschichtungen wie z.B. weiteren Lackschichten bzw. Klebstoffen wie z.B. Epoxidharzklebstoffen bzw. Klebstoffen von Klebefolien. Insbesondere dann, wenn nicht geklebt werden sollte, kann der Anteil an organischem Gleitmittel auch erhöht sein.

Die Aufgabe wird außerdem gelöst mit einem Verfahren zum Herstellen eines Polymere und anorganische Partikel enthaltenden, korrosionsbeständigen, zähelastischen Überzugs auf einer Unterlage, das dadurch gekennzeichnet sein ist, daß ein erfindungsgemäßes Gemisch auf eine gegebenenfalls vorbeschichtete Unterlage aufgebracht, gegebenenfalls getrocknet und zumindest teilweise vernetzt wird.

Vorzugsweise sind alle Komponenten des Gemisches nach dem Trocknen im teilweise oder/und vollständig ausgehärteten Zustand gegenüber Wasser und schwache alkalische Medien beständig.

Der Auftrag des erfindungsgemäßen Gemisches kann insbesondere durch Aufrakeln, Aufwalzen, Sprühen oder/und Spritzen erfolgen. Ein derartiger Auftrag erfolgt vorzugsweise auf einem Band, das vorbeschichtet sein kann. Bei einem Auftrag auf Teile ist das Spritzen besonders bevorzugt. Der Auftrag soll möglichst gleichmäßig aufgetragen werden und von möglichst gleicher Dicke erfolgen.

Das Gemisch kann vorzugsweise im Temperaturbereich von 20 bis 320 °C getrocknet werden, wobei auch eine Lufttrocknung bei Raumtemperaturen oder nur wenig erhöhten Temperaturen genutzt werden kann. Soweit die Vernetzung bei relativ niedrigen Temperaturen ein Bindemittelgemisch für einen ausreichend chemisch stabilen Überzug gewährleistet, ist ein Einbrennen bei meistens hoher Temperatur nicht unbedingt erforderlich. Das Einbrennen eines thermisch vernetzenden Polymersystems kann vorzugsweise im Temperaturbereich von 100 bis 320 °C durchgeführt werden. Es kann auch eine thermische Vernetzung mit einer radikalisch initiierten Vernetzung kombiniert werden, was insbesondere hilft, besonders hohe Vernetzungsgrade zu erzeugen. Insbesondere eine thermische Nachvernetzung nach der radikalisch initiierten Vernetzung ist hierbei vorteilhaft. Dem Fachmann sind die Vernetzungsarten, ihre Kombination und die ihr zugrundeliegenden Polymersysteme ausreichend bekannt.

Bei dem erfindungsgemäßen Verfahren können die gleitfähigen, sehr weichen oder weichen Partikel B wie z.B. Graphit vor der Zugabe zum Gemisch bzw. im Gemisch oder/und in einem Teil des Gemisches jeweils nicht oder nur schwach gemahlen werden. Denn es ist vorteilhaft, wenn die Partikel des Graphits oder/und die Aggregate aus vielen zusammenhängenden bzw. zusammengebackenen Einzelteilchen in ihrer Größe, die vorzugsweise deutlich größer ist als die der elektrisch leitfähigen, harten Partikel A, halbwegs, weitgehend oder gänzlich erhalten bleiben und möglichst nur zum Untermischen geringfügig an Größe verlieren. Vorteilhaft ist, wenn auch diese Partikel möglichst homogen insbesondere im organischen Bindemittelsystem verteilt werden. Der Auftrag des erfindungsgemäßen Gemisches kann auf Bändern, Blechen, Teilen und Verbundkomponenten aus mindestens zwei Teilen, die z.B. durch Clinchen, Kleben oder/und Schweißen verbunden sind, erfolgen. Der Auftrag des erfindungsgemäßen Gemisches kann insbesondere auf den schnell laufenden Bandanlagen wie z.B. Verzinkungsanlagen oder/und Coil-Coating-Anlagen, auf Tafelblechanlagen bzw. in der Teilefertigung, in der Montage bzw. im Reparaturbereich erfolgen.

Bei dem erfindungsgemäßen Verfahren kann der Partikelgrößendurchgangswert d₉₉ der elektrisch leitfähigen, harten Partikel A nicht wesentlich größer, nicht größer oder nur ein wenig kleiner als die durchschnittliche Dicke des Überzuges sein. Vorteilhafterweise liegt der Partikelgrößendurchgangswert d₉₉ der elektrisch leitfähigen, harten Partikel A im Bereich von ± 3 µm, insbesondere im Bereich von ± 2 µm, im Bereich von ± 1 µm, um die mittlere Dicke der erfindungsgemäßen Schweißprimerbeschichtung, mikroskopisch gemessen mit an einem Querschliff. Besonders bevorzugt ist, daß dieser Partikelgrößendurchgangswert d₉₉ etwas kleiner ist (d₉₉ bis zu 2,5, 1,5 oder 0,8 µm kleiner) als die mittlere Dicke der erfindungsgemäßen Schweißprimerbeschichtung.

Es ist bevorzugt, daß bei einer mittleren Dicke der erfindungsgemäßen Schweißprimerbeschichtung von z.B. 8 µm der Partikelgrößendurchgangswert d₉₉ der elektrisch leitfähigen, harten Partikel A im Bereich von 10 bis 5 µm liegt und bei z.B. 6 µm Dicke der Partikelgrößendurchgangswert d₉₉ der elektrisch leitfähigen, harten Partikel A im Bereich von 8 bis 3 µm liegt (d₉₉ + 2 bzw. - 3 µm bzw. d₉₉ + 1 bzw. - 2 µm). Der Partikelgrößendurchgangswert d₉₉ der elektrisch leitfähigen, harten Partikel A ist vorzugsweise geringfügig kleiner als die mittlere Dicke des trockenen gehärteten Überzuges.

Die erfindungsgemäße Beschichtung weist bei Messung des Durchgangswiderstandes eines einseitig mindestens mit einer Schweißprimerschicht versehenen und ggf. auch vorher mit z.B. Zink oder/und einer Vorbehandlung beschichteten Bleches mit einer Laborapparatur entsprechend DVS-Merkblatt 2929 vorzugsweise einen elektrischen Widerstand von höchstens 100 mΩ auf, besonders bevorzugt von höchstens 65 mΩ, ganz besonders bevorzugt von höchstens 30 mΩ. Vorzugsweise gelten diese Angaben auch für zweiseitig beschichtete Bleche.

Darüber hinaus ist es bevorzugt, wenn die erfindungsgemäße Beschichtung auf einem Stahlblech so korrosionsbeständig ist, daß mindestens 10, vorzugsweise mindestens 16, besonders bevorzugt mindestens 20, ganz besonders bevorzugt mindestens 22 Zyklen eines Korrosionschutz-Wechseltests nach VDA 621-415 ohne Auftreten von Rotrost überstanden werden.

Bei dem erfindungsgemäßen Verfahren kann das auf die Unterlage aufgetragene Gemisch getrocknet, eingebrannt, radikalisch bestrahlt oder/und erhitzt werden, um einen gut vernetzten, korrosionsbeständigen, zähelastischen Überzug auszubilden. Bei einem Gehalt an nachvernetzenden Verbindungen kann hiermit aufgrund thermischer Anregung auch noch eine stärkere Nachvernetzung erzielt werden, insbesondere, wenn vorher eine Vernetzung mit radikalischer Strahlung, insbesondere UV-Strahlung, initiiert wurde. Die Pigmentierung liegt in der polymeren Matrix gut verteilt vorzugsweise vor. Darüber hinaus ist es bevorzugt, wenn der Vernetzungsgrad der polymeren Matrix mindestens 70 % beträgt, vorzugsweise mindestens 80 %, besonders bevorzugt mindestens 90 %. Der Vernetzungsgrad kann bei thermisch härtenden Polymersystemen zum Teil auch über die Einbrenntemperatur und -dauer oder/und über den Gehalt an Katalysatoren eingestellt werden.

Bei dem erfindungsgemäßen Verfahren kann ein Überzug mit einer Dicke von weniger als 10 µm, insbesondere von weniger als 8 µm, vorzugsweise von weniger als 6 µm und besonders bevorzugt von weniger als 4 um hergestellt werden, gemessen im trockenen Zustand mikroskopisch an einem Querschliff.

Bei dem erfindungsgemäßen Verfahren kann das Gemisch frei oder im wesentlichen frei sein von organischen Schmiermitteln wie z.B. auf Basis von PTFE, Silicon oder/und Öl, frei sein von anorganischen oder/und organischen Säuren oder/und Schwermetallen und anderen Kationen wie z.B. Arsen, Blei, Cadmium, Chrom, Kobalt, Kupfer oder/und Nickel. Vorzugsweise werden alle oder die meisten dieser Substanzen nicht absichtlich zugegeben. Säuren könnten u.U. die Wasseraufnahme des Überzugs erhöhen. Organische Korrosionsinhibitoren sollten nicht überdosiert zugesetzt werden.

Bei dem erfindungsgemäßen Verfahren kann die Unterlage aus mindestens einem Metall oder/und mindestens einer Legierung bestehen und gegebenenfalls vorbeschichtet sein und insbesondere aus einem Blech aus Aluminium, aus einer Aluminium-, Eisen- oder Magnesiumlegierung oder aus Stahl bestehen wie z.B. Automobilstählen.

Bei dem erfindungsgemäßen Verfahren kann das erfindungsgemäße Gemisch unmittelbar auf eine Vorbehandlungsbeschichtung aufgebracht werden. Die mindestens eine Vorbehandlungsbeschichtung kann hierbei insbesondere eine sein auf Basis von oder mit einem Gehalt an jeweils mindestens einer Silicium-, Titanoder/und Zirkoniumverbindung, auf Basis einer Komplexfluoridverbindung wie z.B. auf Basis TiF₆, auf Basis einer Phosphatierung, auf Basis einer alkalischen Passivierung wie mit einem Gehalt an mindestens einem Metalloxid wie z.B. eine Passivierung auf Basis von Aluminium- Eisen-, Kobalt-, Mangan-, Nickel- oder/und Zinkoxid oder/und auf Basis einer Polymer, feinste Partikel und gegebenenfalls mindestens eine Verbindung von mindestens einem IIIB/IVB-Element wie z.B. La, Y, Lanthanide wie Ce usw., Ti, Zr, Hf oder/und Phosphat enthaltenden Vorbehandlungsbeschichtung.

Ferner wird die Aufgabe gelöst mit einem Polymere und anorganische Partikel enthaltenden, elektrisch leitfähigen Überzug hergestellt mit einem erfindungsgemäßen Gemisch oder/und hergestellt nach dem erfindungsgemäßen Verfahren.

Der erfindungsgemäße Überzug kann als Schweißprimer, als Schutzbeschichtung beim Umformen oder/und Fügen, als Korrosionsschutz von Flächen bzw. im Kanten-, Naht- oder/und Schweißnahtbereich, als Schutz anstelle einer Hohlraumversiegelung oder/und einer Nahtabdichtung, insbesondere für den Fahrzeugbau oder Flugzeugbau, verwendet werden.

### Beispiele und Vergleichsbeispiele:

Die folgenden Beispiele (B) und Vergleichsbeispiele (VB), die in den Tabellen wiedergegeben sind, erläutern bevorzugte Ausführungsformen des erfindungsgemäßen Gemisches, Verfahrens und Überzuges.

Die Versuche für die erfindungsgemäßen Beispiele und für die Vergleichsbeispiele wurden weitgehend mit den in der Lackindustrie üblichen Rohstoffen, Aggregaten und Verfahrensschritten durchgeführt, wenn von einzelnen Pigmenten und einzelnen Mahlverfahren abgesehen wird.

Bei der Herstellung der Gemische wurden alle Bindemittel vorgelegt, mit organischem Lösemittel oder/und Wasser verdünnt, anschließend die Additive und die Korrosionsschutzpigmente D zugesetzt und das vorliegende Gemisch vermahlen. Danach wurden die gegebenenfalls bereits gesondert gemahlenen Partikel A, B bzw. D zugegeben und gründlich mit einem Dissolver dispergiert. Bei den erfindungsgemäßen Beispielen wurden die Phosphide vor der Zugabe zu dem Gemisch gesondert stark gemahlen, so daß der Durchgangswert d₉₉ der Partikelgrößenverteilung bei Eisenphosphid 4 µm und bei Manganphosphid 3,5 µm betrug. Die Partikel von Fe₃O₄ zeigten einen Durchgangswert d₉₉ der Partikelgrößenverteilung von etwa 8,5 µm. Mit Wasser oder/und organischem Lösemittel wurde schließlich die Viskosität auf eine Durchlaufzeit im Durchlaufbecher im Bereich von 30 bis 60 s nach ISO/2431 (5 mm) eingestellt. Der Auftrag dieses Gemisch erfolgte mittels Laborcoater oder Aufziehrakel auf feuerverzinkte bzw. elektrolytisch verzinkte, danach vorbehandelte Bleche von weniger als 1 mm Dicke. Die derart beschichteten Bleche wurden bei 80 °C getrocknet und im Falle thermisch vernetzender Systeme bei Temperaturen von Probe zu Probe unterschiedlich im Bereich von 160 bis zu 300 °C eingebrannt. Im Falle von strahlungshärtenden Systemen wurde die Härtung mit UV-Strahlung initiiert. Die nachvernetzende Verbindung wurde gegebenenfalls unmittelbar vor dem Beschichten zugesetzt und durch Erhitzen auf Temperaturen von ca. 100 °C zur weiteren Vernetzung angeregt.

Die Zusammensetzungen in den Tabellen 1 und 4 sind berechnet auf 100 Gewichtsteile aus den Feststoffgehalten der verschiedenen Zusätze einschließlich zugesetztem Wasser und organischem Lösemittel (Naßlack). Die Tabellen zeigen die Vielfalt von Zusammensetzungen mit unterschiedlichen Bindersystemen und unterschiedlichen Pigmentarten und -anteilen auf. Tabelle 2 gibt die Eigenschaften der mit den Gemischen der Tabelle 1 hergestellten Überzüge wieder. Tabelle 3 variiert ausgehend von einzelnen erfindungsgemäßen Zusammensetzungen der Tabelle 1 die Partikelgrößenverteilungen der Partikel A, B oder/und C und zeigt hierzu die Eigenschaften der mit diesen Gemischen hergestellten Überzüge auf.

Die Partikelgrößenverteilungen wurden mit einem Mastersizer vom Typ S der Fa. Malvern Instruments gemessen, wobei unter Zugabe einer Stichprobe der zu messenden Partikel und von ein bis zwei kleinen Tropfen Tensidgemisch (Pril^{®}) zu deionisiertem Wasser eine Suspension eingestellt wurde, wobei diese Suspension zusätzlich unter Ultaschalleinwirkung mit der im Gerät eingebauten Ultraschallquelle zuerst von ca. 80 % Intensität über ca. 5 s und danach von ca. 30 % Intensität über ca. 25 s dispergiert wurde. Zur Einstellung der Suspension und zur Messung wurde eine Pumpeneinstellung von ca. 50 % und eine Rührereinstellung von ca. 40 % gewählt, und die Messung erfolgte in der Einstellung "obscuration" (ca. 20 %).

An erfindungsgemäßen Proben und an einer Vergleichsprobe wurden Rauheitsmessungen mit einem Perthometer der Fa. Mahr vom Typ S8P und mit einem Taster RFHTB/250 mit einer Meßstrecke von 4 mm, einer Vorschubgeschwindigkeit von 0,5 mm/s und einem Cut-off von 0,8 mm an jeweils fünf Meßstrecken von 4 mm Meßlänge entsprechend DIN 4768 und DIN 4771 vorgenommen, um die Rauheitswerte zu bestimmen und zu mitteln. Es wurden die Rauheitswerte der Tabelle 4 ermittelt: Mittenrauhwert Rₐ, gemittelte Rauhtiefe R_{3Z} und maximale Einzelrauhtiefe Rₘₐₓ.

Darüber hinaus wurde an einseitig beschichteten Proben auch der elektrische Durchgangswiderstand (Einzelblechmessung) mittels einer Laborapparatur nach DVS-Merkblatt 2929 (Deutscher Verband für Schweißtechnik e.V., August 1985) bestimmt. Hierbei wurden bei Raumtemperatur zwei Elektroden aus Sauerstofffreiem Kupfer von 20 mm Durchmesser und von einem Ballenradius r = 300 mm von oben bzw. unten senkrecht auf das einseitig oder ausnahmsweise beidseitig beschichtete Blech geführt, mit 7,5 kN Schließkraft angepreßt und über 2 s mit Gleichspannung bei 10 A Stromstärke gemessen. Die Messung des Durchgangswiderstandes erfolgte an mindestens 10 Stellen, wobei aus den Meßwerten Mittelwerte gebildet wurden.

Die Versuche zeigen, daß die Optimierung der erfindungsgemäßen Beschichtung zwischen Umformbarkeit, Verschleißarmut beim Umformen, chemischer Stabilität, Korrosionsbeständigkeit und Schweißbarkeit beim Widerstandsschweißen keineswegs einfach ist. Während die Zusätze an Partikel B bzw. z.B. an Zink die Umformbarkeit verbessern helfen, kann gerade ein Gehalt an metallischen Partikeln C die Korrosionsbeständigkeit deutlich heruntersetzen. Die jeweilige elektrische Leitfähigkeit und die Anteile der Partikel A, B und C bestimmen die Schweißbarkeit wesentlich mit.

**Tabelle 1: Zusammensetzung der erfindungsgemäßen Beispiele bzw. der Vergleichsbeispiele, berechnet auf Feststoffgehalte**

| **Beispiele, Vergleichsbeispiele** | **B 1** | **B 2** | **B 3** | **B 4** | **B 5** | **B 6** | **B 7** | **B 8** | **VB 9** | **VB 10** | **VB 11** | **VB 12** |
|---|---|---|---|---|---|---|---|---|---|---|---|---|
| **thermische Bindemittel** | | | | | | | | | | | | |
| 1.a. Wässerige Emulsion eines Epoxidharzes "Typ 7" (Bisphenol A) | 5,00 | 5,00 | 5,00 | 5,00 | 5,00 | 5,00 | 5,00 | 5,00 | 5,00 | 5,00 | 5,00 | 5,00 |
| 1.b. Wässerige Emulsion eines flexibilisierten Epoxidharzes "Typ 1" | 4,00 | 4,00 | 4,00 | 4,00 | 4,00 | 4,00 | 4,00 | 4,00 | 4,00 | 4,00 | 4,00 | 4,00 |
| 1.c. Wässerige Emulsion eines HDI-Isocyanates, verkappt | 6,00 | 6,00 | 6,00 | 6,00 | 6,00 | 6,00 | 6,00 | 6,00 | 6,00 | 6,00 | 6,00 | 6,00 |

| **Additive** | | | | | | | | | | | | |
|---|---|---|---|---|---|---|---|---|---|---|---|---|
| 2.a. Polysiloxan | 0,20 | 0,20 | 0,20 | 0,20 | 0,20 | 0,20 | 0,20 | 0,20 | 0,20 | 0,20 | 0,20 | 0,20 |
| 2.b. 2-Amino-2-Methyl-1-Propanol | 0,25 | 0,25 | 0,25 | 0,25 | 0,25 | 0,25 | 0,25 | 0,25 | 0,25 | 0,25 | 0,25 | 0,25 |

| **elektrisch leitfähige bzw. gleitfähige Pigmente** | | | | | | | | | | | | |
|---|---|---|---|---|---|---|---|---|---|---|---|---|
| 3.a. Eisenphosphid | 57,50 | 51,00 | 50,00 | 54,00 | 55,00 | 52,50 | - | - | - | - | 60,00 | - |
| 3.b. Manganphosphid; * = Fe₃O₄ | - | * 4,00 | - | - | - | - | 56,50 | 54,00 | - | - | - | 60,00 |
| 3.c. Aluminium | - | - | - | - | - | - | - | - | 56,50 | 55,00 | - | - |
| 3.d. Graphit | 1,00 | 2,50 | 5,00 | 1,00 | - | - | 1,00 | 1,00 | 1,00 | 1,00 | - | - |
| 3.e. Molybdändisulfid | - | - | - | 2,50 | 2,50 | 5,00 | - | 2,50 | - | 5,00 | - | - |

| **Korrosionsschutzpigmente** | | | | | | | | | | | | |
|---|---|---|---|---|---|---|---|---|---|---|---|---|
| 4.a. mit Kalziumionen modifiziertes Silicatpigment | 5,00 | 5,00 | 5,00 | 5,00 | 5,00 | 5,00 | 5,00 | 5,00 | 5,00 | 5,00 | - | - |

| **Lösemittel** | | | | | | | | | | | | |
|---|---|---|---|---|---|---|---|---|---|---|---|---|
| 5.a. VE-Wasser | 5,00 | 5,00 | 5,00 | 5,00 | 5,00 | 5,00 | 5,00 | 5,00 | 5,00 | 5,00 | 5,00 | 5,00 |
| 5.b. Gesamtgehalt org. Lösemittel | 16,05 | 17,05 | 19,55 | 17,05 | 17,05 | 17,05 | 17,05 | 17,05 | 17,05 | 16,05 | 19,55 | 19,55 |

| **Beispiele, Vergleichsbeispiele** | **B 13** | **B 14** | **B 15** | **B 16** | **B 17** | **B 18** | **VB 19** | **B 20** | **B 21** | **B 22** | **B 23** | **B 24** |
|---|---|---|---|---|---|---|---|---|---|---|---|---|
| **thermische Bindemittel** | | | | | | | | | | | | |
| 1.a. Halbfestes Ester-Epoxidharz | 7,00 | 7,00 | 7,00 | 7,00 | 7,00 | 7,00 | 7,00 | 7,00 | 7,00 | 7,00 | 7,00 | 7,00 |
| 1.b. Polyester, Weichharz | 3,00 | 3,00 | 3,00 | 3,00 | 3,00 | 3,00 | 3,00 | 3,00 | 3,00 | 3,00 | 3,00 | 3,00 |
| 1.c. Emulgiertes HDI, verkappt | 5,25 | 5,25 | 5,25 | 5,25 | 5,25 | 5,25 | 5,25 | 5,25 | 5,25 | 5,25 | 5,25 | 5,25 |

| **Additive** | | | | | | | | | | | | |
|---|---|---|---|---|---|---|---|---|---|---|---|---|
| 2.a. Polysiloxan | 0,05 | 0,05 | 0,05 | 0,05 | 0,05 | 0,05 | 0,05 | 0,05 | 0,05 | 0,05 | 0,05 | 0,05 |
| 2.b. Dibutylzinndilaurat (DBTL) | 1,00 | 1,00 | 1,00 | 1,00 | 1,00 | 1,00 | 1,00 | 1,00 | 1,00 | 1,00 | 1,00 | 1,00 |

| **elektrisch leitfähige bzw. gleitfähige Pigmente** | | | | | | | | | | | | |
|---|---|---|---|---|---|---|---|---|---|---|---|---|
| 3.a. Eisenphosphid | 56,50 | 47,00 | 50,00 | 54,00 | 55,00 | 52,50 | - | - | - | - | 70,00 | - |
| 3.b. Manganphosphid; * = Fe₃O₄ | - | * 8,00 | - | - | - | - | 57,50 | 54,00 | 56,50 | 55,00 | - | 70,00 |
| 3.c. Aluminium | - | - | - | - | - | - | - | - | - | - | 0,50 | 0,50 |
| 3.d. Graphit | 1,00 | 2,50 | 5,00 | 1,00 | - | - | - | 1,00 | 1,00 | - | - | - |
| 3.e. Molybdändisulfid | - | - | - | 2,50 | 2,50 | 5,00 | - | - | 2,50 | 5,00 | - | - |

| **Korrosionsschutzpigmente** | | | | | | | | | | | | |
|---|---|---|---|---|---|---|---|---|---|---|---|---|
| 4.a. mit Kalziumionen modifiziertes Silicatpigment | 5,00 | 5,00 | 5,00 | 5,00 | 5,00 | 5,00 | 5,00 | 5,00 | 5,00 | 5,00 | - | - |

| **Lösemittel** | | | | | | | | | | | | |
|---|---|---|---|---|---|---|---|---|---|---|---|---|
| 5.a. VE-Wasser | - | - | - | - | - | - | - | - | - | - | - | - |
| 5.b. Gesamtgehalt org. Lösemittel | 21,20 | 21,20 | 23,70 | 21,20 | 21,20 | 21,20 | 21,20 | 23,70 | 18,70 | 18,70 | 13,20 | 13,20 |

| **Beispiele, Vergleichsbeispiele** | **VB 25** | **B 26** | **B 27** | **B 28** | **B 29** | **B 30** | **B 31** | **VB 32** | **B 33** | **B 34** | **B 35** | **B 36** |
|---|---|---|---|---|---|---|---|---|---|---|---|---|
| **UV-Bindemittel, ggf. mit Nachvernetzung** | | | | | | | | | | | | |
| 1.a. Polyurethandispersion, radikalisch härtend | 15,00 | 12,50 | 12,50 | 12,50 | 12,50 | 12,50 | 12,50 | 12,50 | 12,50 | 12,50 | 12,50 | 12,50 |
| 1.b. Polyfunktionelles Isocyanurat auf Basis von HDI | - | 2,50 | 2,50 | 2,50 | 2,50 | 2,50 | 2,50 | 2,50 | 2,50 | 2,50 | 2,50 | 2,50 |

| **Additive** | | | | | | | | | | | | |
|---|---|---|---|---|---|---|---|---|---|---|---|---|
| 2 a. Polysiloxan | 0,25 | 0,25 | 0,25 | 0,25 | 0,25 | 0,25 | 0,25 | 0,25 | 0,25 | 0,25 | 0,25 | 0,25 |
| 2 b. 1-Hydroxy-cyclohexyl-phenylketon | 1,50 | 1,50 | 1,50 | 1,50 | 1,50 | 1,50 | 1,50 | 1,50 | 1,50 | 1,50 | 1,50 | 1,50 |
| 2 c. Bis(2,6-dimethoxybenzyl)-2,4,4-tri-methylpentylphosphinoxid | 0,75 | 0,75 | 0,75 | 0,75 | 0,75 | 0,75 | 0,75 | 0,75 | 0,75 | 0,75 | 0,75 | 0,75 |

| **elektrisch leitfähige bzw. gleitfähige Pigmente** | | | | | | | | | | | | |
|---|---|---|---|---|---|---|---|---|---|---|---|---|
| 3.a. Eisenphosphid | 55,00 | 55,00 | 52,50 | 50,00 | 50,00 | 52,50 | 50,00 | - | - | 55,00 | 65,00 | - |
| 3.b. Manganphosphid | - | - | - | - | - | - | - | 55,00 | 54,00 | - | - | 65,00 |
| 3.c. Aluminium | - | - | - | - | - | - | - | - | - | - | 0,50 | 0,50 |
| 3.d. Graphit | - | 1,00 | 2,50 | 5,00 | 1,00 | - | - | - | 1,00 | 2,50 | - | - |
| 3.e. Molybdändisulfid | - | - | - | - | 2,50 | 2,50 | 5,00 | - | - | - | - | - |

| **Korrosionsschutzpigmente** | | | | | | | | | | | | |
|---|---|---|---|---|---|---|---|---|---|---|---|---|
| 4.a. mit Kalziumionen modifiziertes Silicatpigment | 2,50 | 2,50 | 2,50 | 2,50 | 2,50 | 2,50 | 2,50 | 2,50 | 2,50 | 2,50 | - | - |

| **Lösemittel** | | | | | | | | | | | | |
|---|---|---|---|---|---|---|---|---|---|---|---|---|
| 5.a. Gesamtgehalt org. Lösemittel | 2,50 | 2,50 | 2,50 | 2,50 | 2,50 | 2,50 | 2,50 | 2,50 | 2,50 | 2,50 | 2,50 | 2,50 |

| | | | | | | | | | | | | |
|---|---|---|---|---|---|---|---|---|---|---|---|---|
| 5.b. VE-Wasser | 22,50 | 21,50 | 22,50 | 22,50 | 24,00 | 22,50 | 22,50 | 22,50 | 22,50 | 20,00 | 14,50 | 14,50 |

| **Beispiele, Vergleichsbeispiele** | **B 37** | **B 38** | **B 39** | **B 40** | **B 41** | **B 42** | **VB 43** | **VB 44** | **VB 45** | **VB 46** | **B 47** | **VB 48** |
|---|---|---|---|---|---|---|---|---|---|---|---|---|
| **thermische Bindemittel** | | | | | | | | | | | | |
| 1.a. Halbfestes Ester-Epoxidharz | 7,00 | 7,00 | 7,00 | 7,00 | 7,00 | 7,00 | 7,00 | 7,00 | 7,00 | 7,00 | 7,00 | 7,00 |
| 1.b. Polyester, Weichharz | 3,00 | 3,00 | 3,00 | 3,00 | 3,00 | 3,00 | 3,00 | 3,00 | 3,00 | 3,00 | 3,00 | 3,00 |
| 1.c. Emulgiertes HDI, verkappt | 5,25 | 5,25 | 5,25 | 5,25 | 5,25 | 5,25 | 5,25 | 5,25 | 5,25 | 5,25 | 5,25 | 5,25 |

| **Additive** | | | | | | | | | | | | |
|---|---|---|---|---|---|---|---|---|---|---|---|---|
| 2.a. Polysiloxan | 0,05 | 0,05 | 0,05 | 0,05 | 0,05 | 0,05 | 0,05 | 0,05 | 0,05 | 0,05 | 0,05 | 0,05 |
| 2.b. Dibutylzinndilaurat (DBTL) | 1,00 | 1,00 | 1,00 | 1,00 | 1,00 | 1,00 | 1,00 | 1,00 | 1,00 | 1,00 | 1,00 | 1,00 |

| **elektrisch leitfähige bzw. gleitfähige Pigmente mit Zink-Gehalten** | | | | | | | | | | | | |
|---|---|---|---|---|---|---|---|---|---|---|---|---|
| 3.a. Eisenphosphid | 28,00 | 34,50 | 45,50 | 45,00 | 45,00 | 45,00 | - | - | - | - | 35,00 | 70,00 |
| 3.f. Zink | 28,00 | 22,50 | 11,50 | 11,00 | 10,00 | 10,00 | 65,00 | 65,00 | 65,00 | 65,00 | 35,00 | - |
| 3.d. Graphit | - | - | - | 1,00 | 2,00 | 1,00 | 1,00 | - | 1,00 | 1,00 | - | - |
| 3.e. Molybdändisulfid | - | - | - | - | - | 1,00 | - | 1,00 | 1,00 | 1,00 | 1,00 | - |

| **Korrosionsschutzpigmente** | | | | | | | | | | | | |
|---|---|---|---|---|---|---|---|---|---|---|---|---|
| 4.a. mit Kalziumionen modifiziertes Silicatpigment | 2,50 | 2,50 | 2,50 | 2,50 | 2,50 | 2,50 | - | - | - | 2,00 | - | - |

| **Lösemittel, organisch** | | | | | | | | | | | | |
|---|---|---|---|---|---|---|---|---|---|---|---|---|
| 5.a. Gesamtgehalt org. Lösemittel | 2.5,20 | 24,20 | 24,20 | 24,20 | 24,20 | 24,20 | 17,70 | 17,70 | 16,70 | 14,70 | 12,70 | 13,70 |

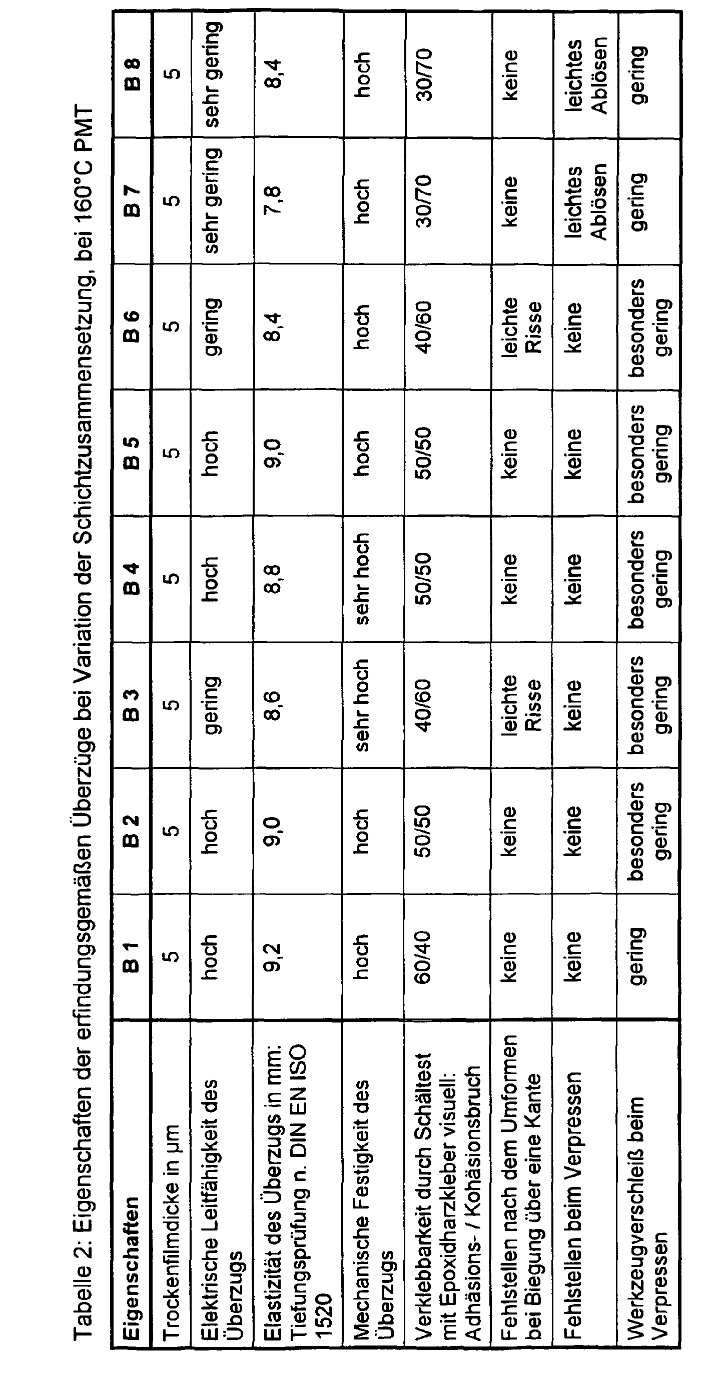

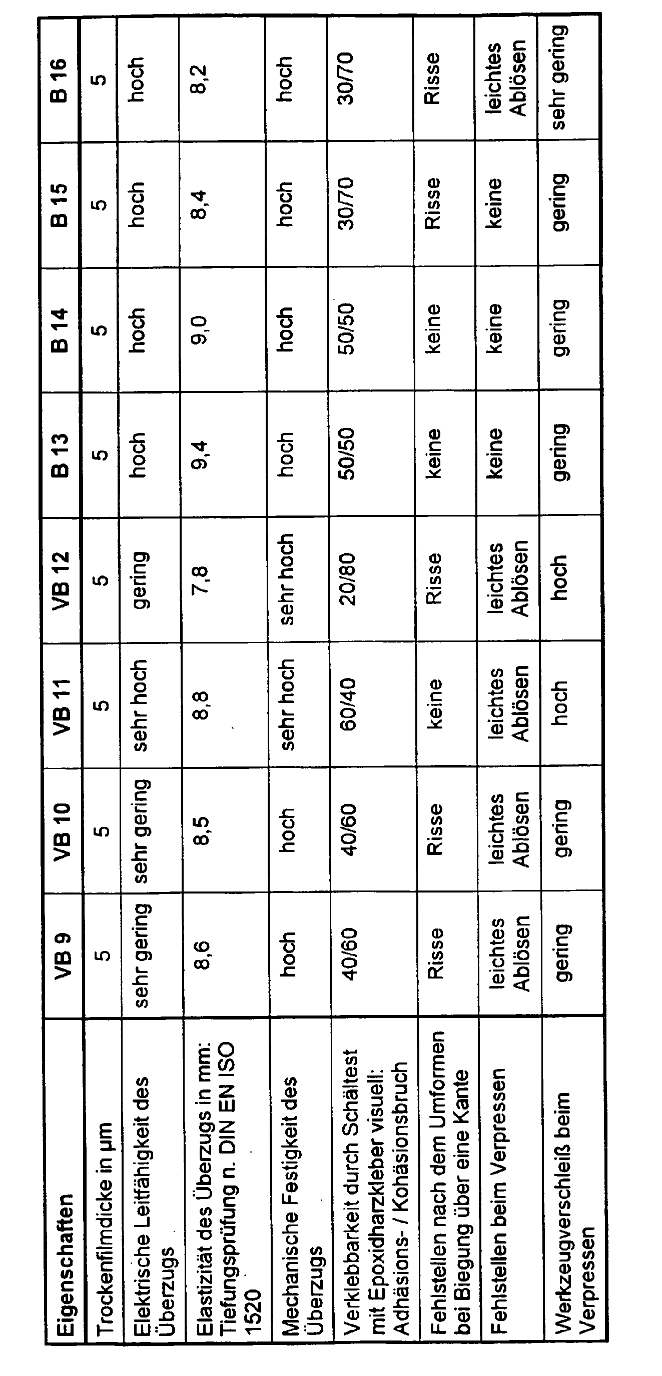

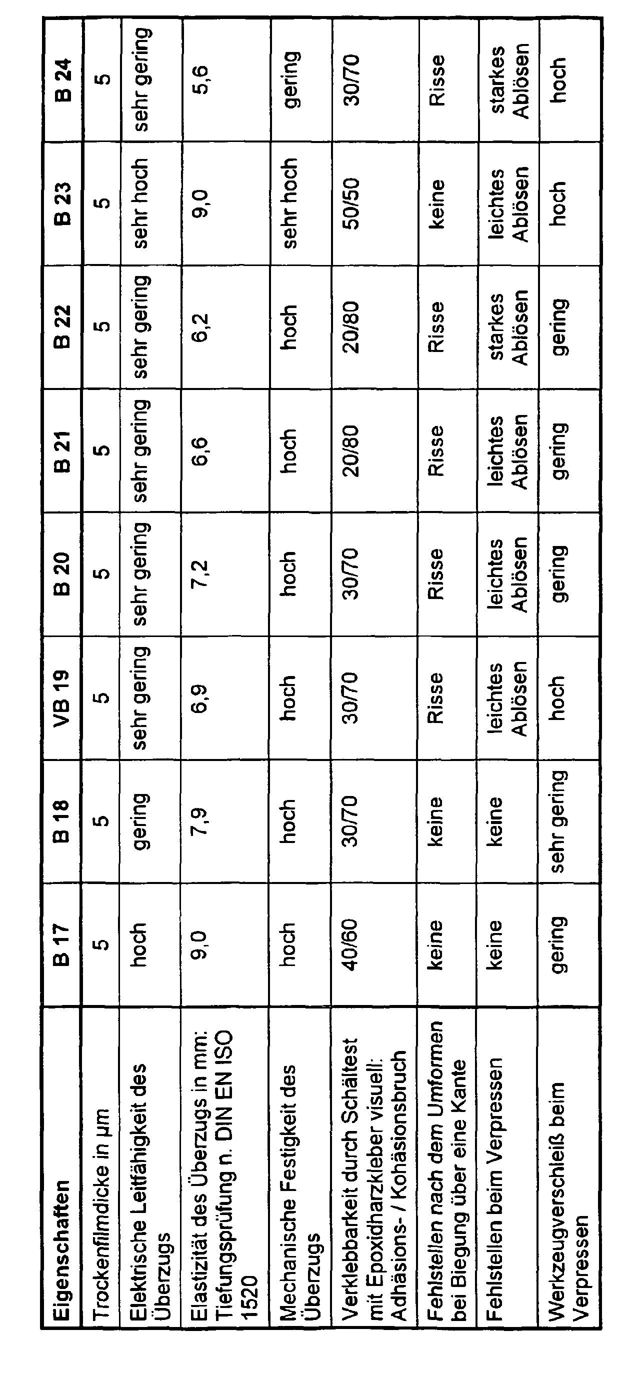

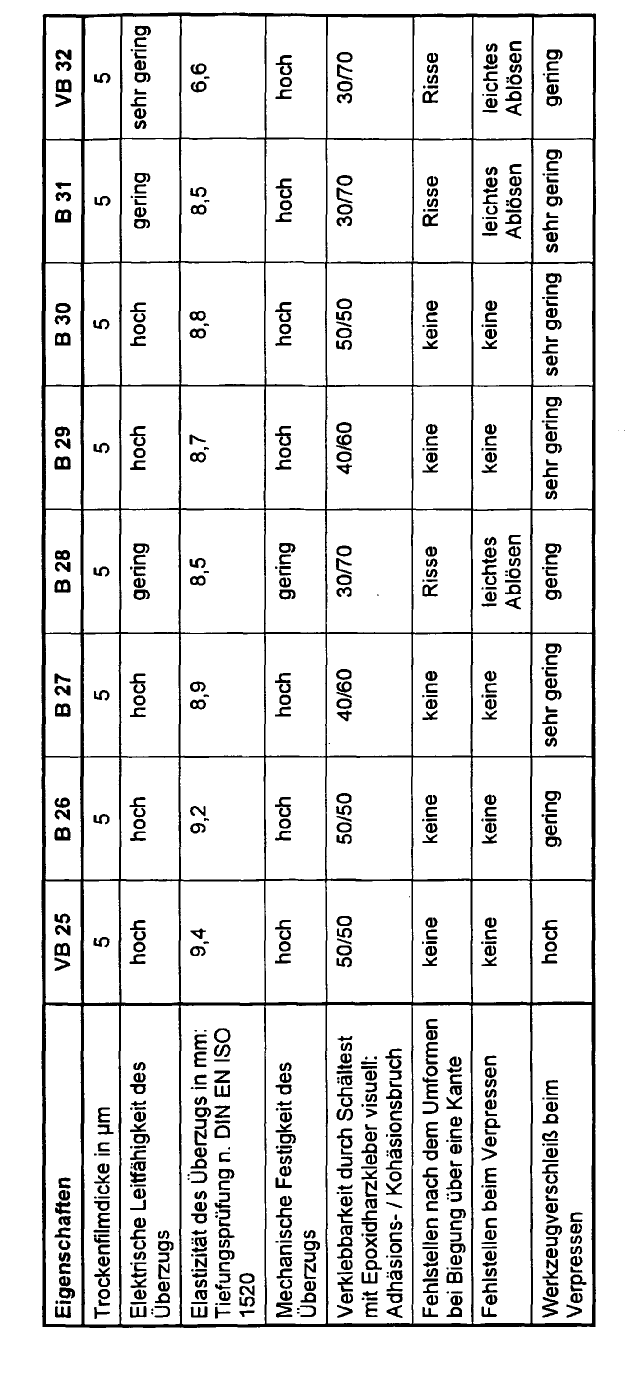

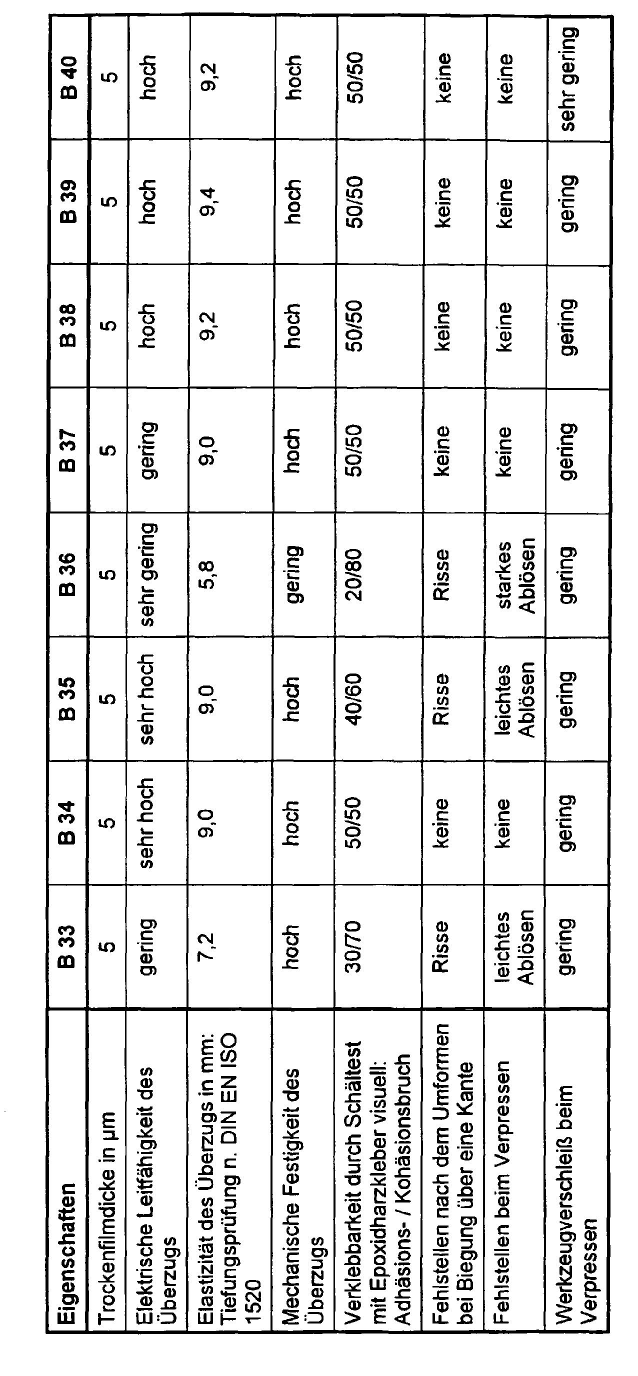

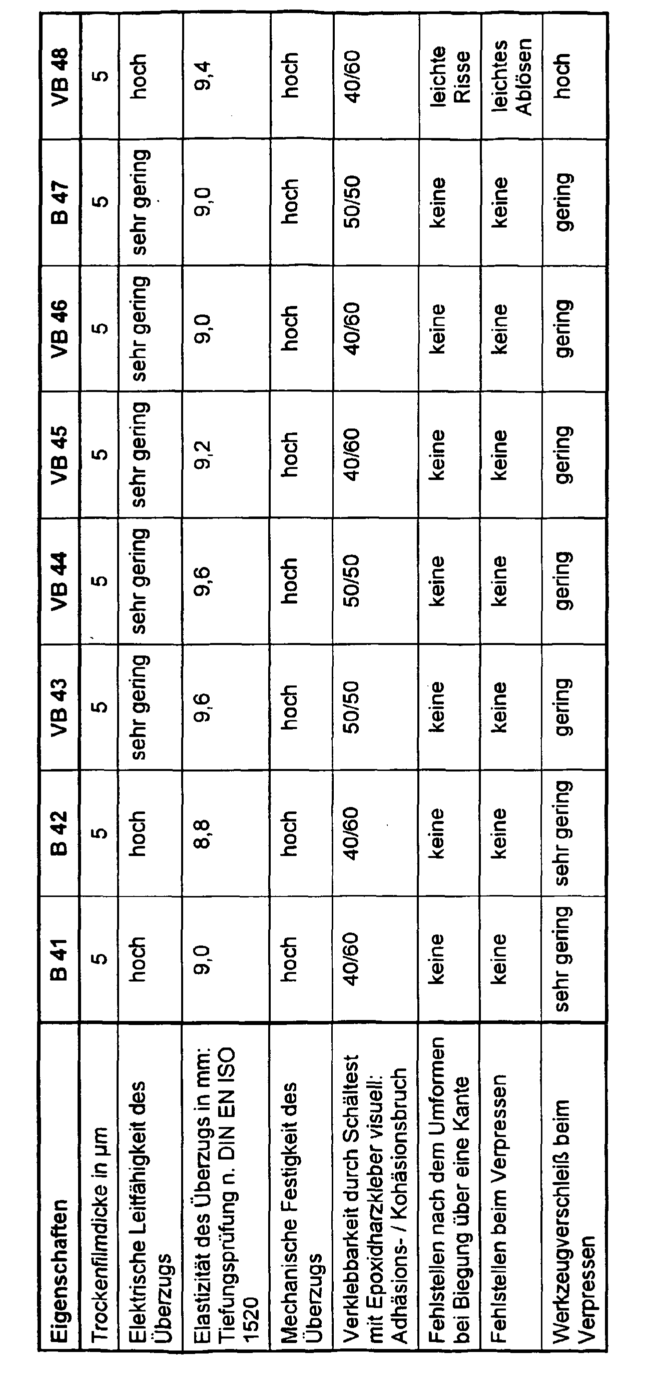

**Tabelle 3: Eigenschaften der erfindungsgemäßen Überzüge bei Variation der Partikelgrößen auf Basis von bestimmten Gemischen.**

| **Eigenschaften** | **B 49** | **B 50** | **VB 51** | **VB 52** | **B 53** | **B 54** | **VB 55** | **VB 56** | **B 57** | **B 58** | **VB 59** | **VB 60** |
|---|---|---|---|---|---|---|---|---|---|---|---|---|
| Zusammensetzung | **Gemisch nach B 1** | | | | **Gemisch nach B 13** | | | | **Gemisch nach B 26** | | | |
| Anteil el. leitfähiger Partikel in Gew.-% | 57,50 | 57,50 | 57,50 | 57,50 | 56,50 | 56,50 | 56,50 | 56,50 | 55,00 | 55,00 | 55,00 | 55,00 |
| d₉₉ el. leitfähige Partikel, µm | 4 | 6 | 12 | 16 | 4 | 6 | 12 | 16 | 4 | 6 | 12 | 16 |
| d₅₀ el. leitfähige Partikel, µm | 1,5 | 2 | 3 | 3,5 | 1,5 | 2 | 3 | 3,5 | 1,5 | 2 | 3 | 3,5 |
| d₁₀ el. leitfähige Partikel, µm | 0,6 | 0,7 | 0,9 | 1,0 | 0,6 | 0,7 | 0,9 | 1,0 | 0,6 | 0,7 | 0,9 | 1,0 |
| Anteil gleitfähige Partikel in Gew.-% | 1,00 | 1,00 | 1,00 | 1,00 | 1,00 | 1,00 | 1,00 | 1,00 | 1,00 | 1,00 | 1,00 | 1,00 |
| d₉₉ gleitfähige Partikel, µm | 20 | 20 | 20 | 20 | 20 | 20 | 20 | 20 | 20 | 20 | 20 | 20 |
| d₅₀ gleitfähige Partikel, µm | 8 | 8 | 8 | 8 | 8 | 8 | 8 | 8 | 8 | 8 | 8 | 8 |
| Trockenfilmdicke in µm | 5 | 5 | 5 | 5 | 5 | 5 | 5 | 5 | 5 | 5 | 5 | 5 |
| Elektrische Leitfähigkeit des Überzugs | hoch | hoch | sehr hoch | sehr hoch | hoch | hoch | sehr hoch | sehr hoch | hoch | hoch | sehr hoch | sehr hoch |
| Elastizität des Überzugs in mm: Tiefungsprüfung n. DIN EN ISO 1520 | 9,2 | 9,4 | 9,6 | 9,6 | 9,4 | 9,6 | 9,6 | 9,6 | 9,2 | 9,6 | 9,6 | 9,6 |
| Mechanische Festigkeit des Überzugs | hoch | hoch | gering | gering | hoch | hoch | gering | gering | hoch | hoch | gering | gering |
| Verklebbarkeit durch Schältest mit Epoxidharzkleber visuell: Adhäsions- / Kohäsionsbruch | 60/40 | 60/40 | 60/40 | 70/30 | 50/50 | 50/50 | 60/40 | 60/40 | 50/50 | 60/40 | 60/40 | 60/40 |
| Fehlstellen nach dem Umformen bei Biegung über eine Kante | keine | keine | leichte Kratzer | starke Kratzer | keine | keine | leichte Kratzer | starke Kratzer | keine | keine | leichte Kratzer | starke Kratzer |
| Fehlstellen beim Verpressen | keine | keine | leichtes Ablösen | leichtes Ablösen | keine | keine | leichtes Ablösen | starkes Ablösen | keine | keine | starkes Ablösen | starkes Ablösen |
| Werkzeugverschleiß beim Verpressen | gering | gering | hoch | sehr hoch | gering | gering | hoch | sehr hoch | gering | gering | hoch | sehr hoch |

| **Eigenschaften** | **B 61** | **B 62** | **VB 63** | **VB 64** | **B 65** | **B 66** | **VB 67** | **VB 68** | **B 69** | **B 70** | **B 71** | **B 72** |
|---|---|---|---|---|---|---|---|---|---|---|---|---|
| Zusammensetzung | **Gemisch nach B 37** | | | | **Gemisch nach B 41** | | | | **Gemisch nach B 41** | | | |
| Anteil el. leitfähiger Partikel in Gew.-% | 28,00 | 28,00 | 28,00 | 28,00 | 45,00 | 45,00 | 45,00 | 45,00 | 45,00 | 45,00 | 45,00 | 45,00 |
| d₉₉ el. leitfähige Partikel, µm | 4 | 6 | 12 | 16 | 4 | 6 | 12 | 16 | 4 | 4 | 4 | 4 |
| d₅₀ ei. leitfähige Partikel, µm | 1,5 | 2 | 3 | 3,5 | 1,5 | 2 | 3 | 3,5 | 1,5 | 1,5 | 1,5 | 1,5 |
| d₁₀ el. leitfähige Partikel, µm | 0,6 | 0,7 | 0,9 | 1,0 | 0,6 | 0,7 | 0,9 | 1,0 | 0,6 | 0,6 | 0,6 | 0,6 |
| Anteil gleitfähige Partikel in Gew.-% | - | - | - | - | 2,00 | 2,00 | 2,00 | 2,00 | 2,00 | 2,00 | 2,00 | 2,00 |
| d₉₉ gleitfähige Partikel, µm | 20 | 20 | 20 | 20 | 20 | 20 | 20 | 20 | 20 | 15 | 20 | 15 |
| d₅₀ gleitfähige Partikel, µm | 8 | 8 | 8 | 8 | 8 | 8 | 8 | 8 | 8 | 7 | 8 | 7 |
| Anteil Zink-Partikel in Gew.-% | 28,00 | 28,00 | 28,00 | 28,00 | 10,00 | 10,00 | 10,00 | 10,00 | 10,00 | 10,00 | 10,00 | 10,00 |
| d₉₉ Zink-Partikel, µm | 10 | 10 | 10 | 10 | 10 | 10 | 10 | 10 | 10 | 10 | 6 | 6 |
| d₅₀ Zink-Partikel, µm | 4 | 4 | 4 | 4 | 4 | 4 | 4 | 4 | 4 | 4 | 2,5 | 2,5 |
| Trockenfilmdicke in µm | 5 | 5 | 5 | 5 | 5 | 5 | 5 | 5 | 5 | 5 | 5 | 5 |
| Elektrische Leitfähigkeit des Überzugs | gering | gering | gering | gering | hoch | hoch | hoch | hoch | hoch | hoch | hoch | hoch |
| Elastizität des Überzugs in mm: Tiefungsprüfung n. DIN EN ISO 1520 | 9,0 | 9,0 | 9,2 | 9,2 | 9,0 | 9,0 | 9,2 | 9,3 | 9,0 | 9,0 | 8,8 | 8,8 |
| Mechanische Festigkeit des Überzugs | hoch | hoch | hoch | hoch | hoch | hoch | hoch | hoch | hoch | hoch | hoch | hoch |
| Verklebbarkeit durch Schältest mit Epoxidharzkleber visuell: Adhäsions- / Kohäsionsbruch | 50/50 | 50/50 | 50/50 | 50/50 | 40/60 | 40/60 | 40/60 | 40/60 | 40/60 | 40/60 | 40/60 | 40/60 |
| Fehlstellen nach dem Umformen bei Biegung über eine Kante | keine | keine | leichte Kratzer | starke Kratzer | keine | keine | leichte Kratzer | starke Kratzer | keine | keine | keine | keine |
| Fehlstellen beim Verpressen | keine | keine | leichtes Ablösen | starkes Ablösen | keine | keine | leichtes Ablösen | starkes Ablösen | keine | keine | keine | keine |
| Werkzeugverschleiß beim Verpressen | gering | gering | hoch | sehr hoch | sehr gering | gering | hoch | sehr hoch | sehr gering | sehr gering | sehr gering | sehr gering |

**Tabelle 4: Meßergebnisse an beschichteten Blechen je nach Substrat und Beschichtung. SPS = Schweißprimerschicht. DW = Durchgangswiderstand. DWs = Standardabweichung der Durchgangswiderstands-Meßreihe.**

| | B 73 | B 74 | VB75 | B 76 | B 77 | B 78 | B 79 | B 80 | B 81 | B 82 |
|---|---|---|---|---|---|---|---|---|---|---|
| Substrat | Al | Al | Al | Stahl | Stahl | Stahl | Stahl | Stahl | Stahl | Stahl |
| Blechdicke mm | 1,2 | 1,2 | 1,2 | 1,45 | 0,75 | 0,75 | 0,75 | 0,75 | 0,75 | 0,75 |
| Zinkschicht | - | - | - | ZE | ZE | ZE | ZE | ZE | ZE | ZE |
| Vorbehandlungsschicht | Komplexfluoride | Komplexfluoride | Komplexfluoride | Komplexfluorid-P. | Komplexfluorid- P. | Komplexfluorid- P. | Komplexfluorid-P. | Komplexfluorid-P. | Komplexfluorid-P. | Komplexfluorid-P. |
| SPS-Auftrag | einseitig | einseitig | einseitig | zweiseitig | zweiseitig | einseitig | einseitig | einseitig | einseitig | einseitig |
| SPS Dicke µm | 5 | 5 | 5 | 5 | 5 | 5 | 5 | 5 | 5 | 5 |
| SPS Partikel A Gew.-% | 55 Fe-Phosphid | 50 Fe-Phosphid | 0 | 55 Fe-Phosphid | 55 Fe-Phosphid | 30 Fe-Phosphid | 30 Fe-Phosphid | 40 Fe-Phosphid | 55 Fe-Phosphid | 55 Fe₃O₄ |
| SPS Partikel B Gew.-% | 0,2 Graphit | 5 Graphit | 10 Graphit | 1 Graphit | 1 Graphit | 1 Graphit, 25 Zink | 1 Graphit, 30 Zink | 1 Graphit, 15 Zink | 2,5 MoS₂ | 1 Graphit |
| SPS Partikel D Gew.-% | 2,5 Ca-Silicat | 2,5 Ca-Silicat | 2,5 Ca-Silicat | 5 Ca-Silicat | 5 Ca-Silicat | 3 Ca-Silicat | 3 Ca-Silicat | 5 Ca-Silicat | 5 Ca-Silicat | 5 Ca-Silicat |
| DW mΩ | 4,8 | 54,7 | 48,6 | 5,6 | 6,3 | 5,7 | 3,3 | 13,6 | 16,9 | 26,6 |
| DWs mΩ, ± | 0,5 | 8,4 | 7,8 | 0,2 | 0,5 | 0,9 | 0,6 | 4,2 | 9,4 | 2,1 |
| Rₐ µm | 0,65 | 0,70 | 0,71 | 0,66 | 0,73 | 0,86 | 1,02 | 0,92 | 0,79 | 0,85 |
| R_{3z} µm | 3,67 | 3,88 | 3,75 | 3,60 | 3,96 | 4,64 | 5,52 | 5,05 | 4,14 | 4,26 |
| Rₘₐₓ µm | 4,86 | 5,65 | 5,49 | 5,32 | 7,14 | 6,87 | 7,66 | 7,26 | 6,00 | 6,46 |
| Umformbarkeit | n.b. | n.b. | n.b. | weniger gut | weniger gut | gut bis sehr gut | gut bis sehr gut | gut | weniger gut | gut |
| Schweißbarkeit | n.b. | n.b. | n.b. | gut bis sehr gut | gut bis sehr gut | gut bis sehr gut | sehr gut | weniger gut | weniger gut | befriedigend |

## Patentansprüche

1. Gemisch zum Aufbringen eines polymeren, korrosionsbeständigen, verschleißarm umformbaren und elektrisch leitfähigen Überzugs auf eine Unterlage, insbesondere auf eine metallische Unterlage wie z.B. ein Stahlblech, wobei die Unterlage gegebenenfalls z.B. mit mindestens einer Zinkschicht oder/und einer Zink-haltigen Legierungsschicht oder/und mit mindestens einer Vorbehandlungschicht vorbeschichtet sein kann, wobei das Gemisch neben mindestens einer Substanz A in Form von elektrisch leitfähigen harten Partikeln mit einer Mohs'schen Härte von mindestens 5,5 mindestens eine Substanz B in Form von sehr weichen oder weichen, anorganischen, gleitfähigen, elektrisch leitfähigen oder halbleitenden Partikeln oder/und mindestens eine Substanz C in Form von metallischen, weichen oder harten, elektrisch leitfähigen oder halbleitenden Partikeln oder/und Ruß sowie mindestens ein Bindemittel und jeweils mindestens einen Vernetzer oder/und einen Photoinitiator sowie gegebenenfalls auch jeweils mindestens eine nachvernetzende Verbindung, ein Additiv, ein Korrosionsschutzpigment D, einen nicht in Partikelform vorliegenden Korrosionsinhibitor, ein organisches Lösemittel oder/und Wasser enthält, wobei A. B und C wasserunlösliche oder schwer wasserlösliche Pigmente sind, **dadurch gekennzeichnet, daß** die Summe der Gewichtsanteile der anorganischen gleitfähigen Partikel B und der metallischen Partikel oder/und Ruß C 0,25 bis 99,5 % der Gewichtsanteile an wasserunlöslicher bzw schwer wasserlöslicher Pigmentierung Σ (A + B + C) ausmacht und daß die Größe der elektrisch leitfähigen, harten Partikel A bezogen auf den Partiketgrößendurchgangswert d₉₉ gemessen mit einem Mastersizer vom Typ S der Fa. Malvern Instruments weniger als 10 µm beträgt.

2. Gemisch nach Anspruch 1, **dadurch gekennzeichnet, daß** die Summe der Gewichtsanteile der wasserunlöslichen bzw. schwer wasserlöslichen Pigmentierung Σ (A + B + C) zur Summe der gesamten Pigmentierung Σ (A + B + C + D) 30 bis 99 Gew.-% beträgt.

3. Gemisch nach Anspruch 1 oder 2, **dadurch gekennzeichnet, daß** die Mischung aus allen Arten von elektrisch leitfähigen, harten Partikeln A eine mittlere Partikelgröße d₅₀ im Bereich von 0,1 bis 2,5 µm aufweist, insbesondere im Bereich von 0,2 bis 2 µm.

4. Gemisch nach einem der vorstehenden Ansprüche, **dadurch gekennzeichnet, daß** die Mischung aus allen Arten von elektrisch leitfähigen, harten Partikeln A eine steile Partikelgrößenverteilung aufweist, bei der der Durchgangswert d₉₉ zum Durchgangswert d₁₀ höchstens den Faktor 12 aufweist.

5. Gemisch nach einem der vorstehenden Ansprüche, **dadurch gekennzeichnet, daß** die Mischung aus allen Arten von gleitfähigen, sehr weichen oder weichen Partikeln B bei der Zugabe zu dem Gemisch einen Partikelgrößendurchgangswert d₉₉ im Bereich von 1 bis 30 µm aufweist.

6. Gemisch nach einem der vorstehenden Ansprüche, **dadurch gekennzeichnet, daß** die Mischung aus allen Arten von gleitfähigen, sehr weichen oder weichen Partikeln B bei der Zugabe zu dem Gemisch eine mittlere Partikelgröße d₅₀ im Bereich von 0,1 bis 20 µm aufweist.

7. Gemisch nach einem der vorstehenden Ansprüche, **dadurch gekennzeichnet, daß** die mittlere Partikelgröße d₅₀ der gleitfähigen, sehr weichen oder weichen Partikel B bei der Zugabe zu dem Gemisch um den Faktor 1,5 bis 7 größer ist als die mittlere Partikelgröße d₅₀ der elektrisch leitfähigen, harten Partikel A.

8. Gemisch nach einem der vorstehenden Ansprüche, **dadurch gekennzeichnet, daß** die Mischung aus allen Arten von metallischen Partikeln oder/und Ruß C bei der Zugabe zu dem Gemisch einen Partikelgrößendurchgangswert d₉₉ im Bereich von 0,05 bis 20 µm aufweist.

9. Gemisch nach einem der vorstehenden Ansprüche, **dadurch gekennzeichnet, daß** die Mischung aus allen Arten von metallischen Partikeln oder/und Ruß C bei der Zugabe zu dem Gemisch eine mittlere Partikelgröße d₅₀ im Bereich von 0,01 bis 10 µm aufweist.

10. Gemisch nach einem der vorstehenden Ansprüche, **dadurch gekennzeichnet, daß** die mittlere Partikelgröße d₅₀ der metallischen Partikel oder/und Ruß C bei der Zugabe zu dem Gemisch um den Faktor 0,1 bis 4 größer ist als die mittlere Partikelgröße d₅₀ der elektrisch leitfähigen, harten Partikel A.

11. Gemisch nach einem der vorstehenden Ansprüche, **dadurch gekennzeichnet, daß** der Anteil an elektrisch leitfähigen, harten Partikeln A im Gemisch 10 bis 80 Gew.-% und der Anteil an gleitfähigen, sehr weichen oder weichen Partikeln B im Gemisch 0,1 bis 16 Gew.-% jeweils bezogen auf das Gewicht des Feststoffs im Naßlack beträgt.

12. Gemisch nach einem der vorstehenden Ansprüche, **dadurch gekennzeichnet, daß** der Anteil an metallischen Partikeln oder/und Ruß C im Gemisch 0 bis 75 Gew.-% bezogen auf das Gewicht des Feststoffs im Naßlack beträgt.

13. Gemisch nach einem der vorstehenden Ansprüche, **dadurch gekennzeichnet, daß** die Mischung aus allen Arten von Korrosionsschutzpartikeln D bei der Zugabe zu dem Gemisch eine mittlere Partikelgröße d₅₀ im Bereich von 0,01 bis 5 µm aufweist.

14. Gemisch nach einem der vorstehenden Ansprüche, **dadurch gekennzeichnet, daß** die Mischung aus allen Arten von Korrosionsschutzpartikeln D bei der Zugabe zu dem Gemisch der Partikelgrößendurchgangswert d₉₉ im Bereich von 0,03 bis 10 µm aufweist.

15. Gemisch nach einem der vorstehenden Ansprüche, **dadurch gekennzeichnet, daß** die elektrisch leitfähigen, harten Partikel A Substanzen auf Basis von Verbindungen oder Gemischen von Verbindungen mit oder von Spinellen wie z. B. Fe₃O₄, Mn₃O₄, FeMn₂O₄ oder/und weiteren Substanzen auf Basis von Boriden, Carbiden, Oxiden, Phosphaten, Phosphiden, Silicaten, Siliciden bzw. elektrisch leitfähig beschichteten Partikeln oder/und deren Mischung bzw. deren gemeinsamer Verbindung, und daß gegebenenfalls weitere metallische Partikel oder/und Ruß C enthalten sind ausgewählt aus Aluminium, Eisen, Kobalt, Kupfer, Molybdän, Nickel, Niob, Silber, Tantal, Titan, Vanadium, Wolfram, Zink, Zinn, Aluminium-, Eisen-, Kobalt-, Kupfer-, Molybdän-, Nickel-, Niob-, Silber-, Tantal-, Titan-, Vanadium-, Wolfram-, Zink- oder/und Zinn-haltigen Legierungen.

16. Gemisch nach einem der vorstehenden Ansprüche, **dadurch gekennzeichnet, daß** mindestens 30 Gew.-% der elektrisch leitfähigen, harten Partikel A Oxide oder/und Phosphide im wesentlichen auf Basis von Aluminium, Eisen, Kobalt, Kupfer, Mangan, Molybdän, Nickel, Niob, Tantal, Titan, Vanadium, Wolfram, Zink oder/und Zinn sind.

17. Gemisch nach einem der vorstehenden Ansprüche, **dadurch gekennzeichnet, daß** die gleitfähigen, sehr weichen oder weichen Partikel B vorwiegend oder gänzlich aus Graphit, Sulfid, Selenid oder/und Tellurid bestehen, insbesondere aus Graphit, Antimon-haltigem Sulfid, Zinn-haltigem Sulfid, Molybdän-haltigem Sulfid oder/und Wolfram-haltigem Sulfid.

18. Gemisch nach einem der vorstehenden Ansprüche, **dadurch gekennzeichnet, daß** es nicht mehr als 0,5 Gew.-% an Wachs oder/und an Substanzen mit wachsartigen Eigenschaften enthält, vorzugsweise nicht mehr als 0,2 Gew.-%, bezogen auf das Trockengewicht des Naßlacks, besonders bevorzugt kein Wachs und keine Substanzen mit wachsartigen Eigenschaften.

19. Verfahren zum Herstellen eines Polymere und anorganische Partikel enthaltenden, korrosionsbeständigen, zähelastischen Überzugs auf einer Unterlage, **dadurch gekennzeichnet, daß** ein Gemisch nach einem der Ansprüche 1 bis 18 auf eine gegebenenfalls vorbeschichtete Unterlage aufgebracht, gegebenenfalls getrocknet und zumindest teilweise vernetzt wird.

20. Verfahren nach Anspruch 19, **dadurch gekennzeichnet, daß** die gleitfähigen sehr weichen oder weichen Partikel B wie z.B. Graphit vor der Zugabe zum Gemisch bzw. im Gemisch oder/und in einem Teil des Gemisches jeweils nicht oder nur schwach gemahlen werden.

21. Verfahren nach Anspruch 19 oder 20, **dadurch gekennzeichnet, daß** die elektrisch leitfähigen, harten Partikel A für sich vermahlen werden.

22. Verfahren nach einem der Ansprüche 19 bis 21, **dadurch gekennzeichnet, daß** beim Mahlen der elektrisch leitfähigen, harten Partikel A vorwiegend das Überkorn zerkleinert wird, so daß eine engere Partikelgrößenverteilung entsteht.

23. Verfahren nach einem der Ansprüche 19 bis 22, **dadurch gekennzeichnet, daß** der Partikelgrößendurchgangswert d₉₉ der elektrisch leitfähigen, harten Partikel A nicht wesentlich größer, nicht größer oder nur ein wenig kleiner ist als die durchschnittliche Dicke des Überzuges.

24. Verfahren nach einem der Ansprüche 19 bis 23, **dadurch gekennzeichnet, daß** das auf die Unterlage aufgetragene Gemisch getrocknet, eingebrannt, radikalisch bestrahlt oder/und erhitzt wird, um einen gut vernetzten, korrosionsbeständigen, zähelastischen Überzug auszubilden.

25. Verfahren nach einem der Ansprüche 19 bis 24, **dadurch gekennzeichnet, daß** ein Überzug mit einer Dicke von weniger als 10 µm, insbesondere weniger als 8 µm, vorzugsweise weniger als 6 µm und besonders bevorzugt von weniger als 4 µm hergestellt wird, gemessen im trockenen Zustand mikroskopisch an einem Querschliff.

26. Verfahren nach einem der Ansprüche 19 bis 25, **dadurch gekennzeichnet, daß** die Unterlage aus mindestens einem Metall oder/und mindestens einer Legierung besteht und ggf. vorbeschichtet ist, insbesondere aus einem Blech bestehend aus Aluminium, aus einer Aluminium-, Eisen- oder Magnesiumlegierung oder aus Stahl wie z.B. Automobilstählen.

27. Verfahren nach einem der Ansprüche 19 bis 26, **dadurch gekennzeichnet, daß** das erfindungsgemäße Gemisch unmittelbar auf eine Vorbehandlungsbeschichtung aufgebracht wird.

28. Polymere und anorganische Partikel enthaltender, elektrisch leitfähiger Überzug hergestellt mit einem Gemisch nach einem der Ansprüche 1 bis 18 oder/und hergestellt mit einem Verfahren nach einem der Ansprüche 19 bis 27.

29. Verwendung des Überzugs nach Anspruch 28 als Schweißprimer, als Schutzbeschichtung beim Umformen oder/und Fügen, als Korrosionsschutz von Flächen bzw. im Kanten-, Naht- oder/und Schweißnahtbereich, als Schutz anstelle einer Hohlraumversiegelung oder/und einer Nahtabdichtung, insbesondere für den Fahrzeugbau oder Flugzeugbau.

## Claims

1. A mixture for applying a polymeric, corrosion-resistant, electrically conductive coating, which can be shaped in a low-abrasion manner, to a substrate, in particular to a metallic substrate such as e.g. a steel sheet, it being possible for the substrate optionally to be precoated e.g. with at least one zinc layer and/or a zinc-containing alloy layer and/or with at least one pretreatment layer, wherein the mixture comprises, in addition to at least one substance A in the form of electrically conductive hard particles with a Mohs hardness of at least 5.5, at least one substance B in the form of very soft or soft, inorganic, electrically conductive or semiconducting particles which are capable of sliding and/or at least one substance C in the form of metallic, soft or hard, electrically conductive or semiconducting particles and/or carbon black and at least one binder and in each case at least one crosslinking agent and/or a photoinitiator and optionally also in each case at least one post-crosslinking compound, an additive, a corrosion protection pigment D, a corrosion inhibitor which is not present in particle form, an organic solvent and/or water, A, B and C being water-insoluble or sparingly water-soluble pigments, **characterized in that** the sum of the weight contents of the inorganic particles B which are capable of sliding and of the metallic particles and/or carbon black C makes up 0.25 to 99.5 % of the weight contents of water-insoluble or sparingly water-soluble pigmentation Σ (A + B + C), and **in that** the size of the electrically conductive hard particles A, based on the particle size passage value d₉₉ measured with a Mastersizer Type S from Malvern Instruments, is less than 10 µm.

2. A mixture according to claim 1, **characterized in that** the sum of the weight contents of the water-insoluble or sparingly water-soluble pigmentation Σ (A + B + C) relative to the sum of the total pigmentation Σ (A + B + C + D) is 30 to 99 wt.%.

3. A mixture according to claim 1 or 2, **characterized in that** the mixture of all the types of electrically conductive hard particles A has an average particle size d₅₀ in the range from 0.1 to 2.5 µm, in particular in the range from 0.2 to 2 µm.

4. A mixture according to one of the preceding claims, **characterized in that** the mixture of all the types of electrically conductive hard particles A has a steep particle size distribution in which the passage value d₉₉ relates to the passage value d₁₀ by a factor of at most 12.

5. A mixture according to one of the preceding claims, **characterized in that**, on addition to the mixture, the mixture of all the types of very soft or soft particles B which are capable of sliding has a particle size passage value d₉₉ in the range from 1 to 30 µm.

6. A mixture according to one of the preceding claims, **characterized in that**, on addition to the mixture, the mixture of all the types of very soft or soft particles B which are capable of sliding has a mean particle size d₅₀ in the range from 0.1 to 20 µm.

7. A mixture according to one of the preceding claims, **characterized in that**, on addition to the mixture, the mean particle size d₅₀ of the very soft or soft particles B which are capable of sliding is greater than the mean particle size d₅₀ of the electrically conductive hard particles A by a factor of 1.5 to 7.

8. A mixture according to one of the preceding claims, **characterized in that**, on addition to the mixture, the mixture of all the types of metallic particles and/or carbon black C has a particle size passage value d₉₉ in the range from 0.05 to 20 µm.

9. A mixture according to one of the preceding claims, **characterized in that**, on addition to the mixture, the mixture of all the types of metallic particles and/or carbon black C has a mean particle size d₅₀ in the range from 0.01 to 10 µm.

10. A mixture according to one of the preceding claims, **characterized in that**, on addition to the mixture, the mean particle size d₅₀ of the metallic particles and/or carbon black C is greater than the mean particle size d₅₀ of the electrically conductive hard particles A by a factor of 0.1 to 4.

11. A mixture according to one of the preceding claims, **characterized in that** the content of electrically conductive hard particles A in the mixture is 10 to 80 wt.% and the content in the mixture of very soft or soft particles B which are capable of sliding is 0.1 to 16 wt.%, in each case based on the weight of the solids in the wet lacquer.

12. A mixture according to one of the preceding claims, **characterized in that** the content of metallic particles and/or carbon black C in the mixture is 0 to 75 wt.%, based on the weight of the solids in the wet lacquer.

13. A mixture according to one of the preceding claims, **characterized in that**, on addition to the mixture, the mixture of all the types of corrosion protection particles D has a mean particle size d₅₀ in the range from 0.01 to 5 µm.

14. A mixture according to one of the preceding claims, **characterized in that**, on addition to the mixture, the mixture of all the types of corrosion protection particles D has a particle size passage value d₉₉ in the range from 0.03 to 10 µm.

15. A mixture according to one of the preceding claims, **characterized in that** the electrically conductive hard particles A comprise substances based on compounds or mixtures of compounds with or of spinels, such as e.g. Fe₃O₄, Mn₃O₄, FeMn₂O₄ and/or further substances based on borides, carbides, oxides, phosphates, phosphides, silicates, silicides or particles having an electrically conductive coating and/or a mixture thereof or a joint compound thereof, and **in that** further metallic particles and/or carbon black C chosen from aluminium, iron, cobalt, copper, molybdenum, nickel, niobium, silver, tantalum, titanium, vanadium, tungsten, zinc, tin, aluminium-, iron-, cobalt-, copper-, molybdenum-, nickel-, niobium-, silver-, tantalum-, titanium-, vanadium-, tungsten-, zinc- and/or tin-containing alloys are optionally present.

16. A mixture according to one of the preceding claims, **characterized in that** at least 30 wt.% of the electrically conductive hard particles A are oxides and/or phosphides substantially based on aluminium, iron, cobalt, copper, manganese, molybdenum, nickel, niobium, tantalum, titanium, vanadium, tungsten, zinc and/or tin.

17. A mixture according to one of the preceding claims, **characterized in that** the very soft or soft particles B which are capable of sliding predominantly or entirely comprise graphite, sulfide, selenide and/or telluride, in particular graphite, antimony-containing sulfide, tin-containing sulfide, molybdenum-containing sulfide and/or tungsten-containing sulfide.

18. A mixture according to one of the preceding claims, **characterized in that** it comprises not more than 0.5 wt.% of wax and/or of substances having wax-like properties, preferably not more than 0.2 wt.%, based on the dry weight of the wet lacquer, particularly preferably no wax and no substances having wax-like properties.

19. A process for the production of a corrosion-resistant, viscoelastic coating comprising polymers and inorganic particles on a substrate, **characterized in that** a mixture according to one of claims 1 to 18 is applied to an optionally precoated substrate, optionally dried and at least partly crosslinked.

20. A process according to claim 19, **characterized in that** the very soft or soft particles B which are capable of sliding, such as e.g. graphite, are in each case not ground or are only slightly ground before addition to the mixture or in the mixture and/or in a portion of the mixture.

21. A process according to claim 19 or 20, **characterized in that** the electrically conductive hard particles A are ground by themselves.

22. A process according to one of claims 19 to 21, **characterized in that** on grinding the electrically conductive hard particles A, predominantly the oversized particles are comminuted, resulting in a narrower particle size distribution.

23. A process according to one of claims 19 to 22, **characterized in that** the particle size passage value d₉₉ of the electrically conductive hard particles A is not substantially greater than, is not greater than or is only slightly less than the average thickness of the coating.

24. A process according to one of claims 19 to 23, **characterized in that** the mixture applied to the substrate is dried, stoved, irradiated with free radicals and/or heated in order to form a thoroughly crosslinked, corrosion-resistant, viscoelastic coating.

25. A process according to one of claims 19 to 24, **characterized in that** a coating having a thickness of less than 10 µm, in particular less than 8 µm, preferably less than 6 µm and particularly preferably less than 4 µm, measured in the dry state microscopically on a ground cross-section, is produced.

26. A process according to one of claims 19 to 26, **characterized in that** the substrate comprises at least one metal and/or at least one alloy and is optionally precoated, in particular comprises a sheet comprising aluminium, an aluminium, iron or magnesium alloy or steel, such as e.g. automobile steels.

27. A process according to one of claims 19 to 26, **characterized in that** the mixture according to the invention is applied directly to a pretreatment coating.

28. Electrically conductive coating containing polymers and inorganic particles, produced using a mixture according to one of claims 1 to 18 and/or produced using a process according to one of claims 19 to 27.

29. Use of the coating according to claim 28 as a welding primer, as a protective coating during shaping and/or joining, as corrosion protection of surfaces or in the edge, seam and/or welded seam region, as protection instead of a hollow cavity seal and/or a seam seal, in particular for vehicle construction or aircraft construction.

## Revendications

1. Composition destinée au dépôt d'un revêtement à base de polymère, résistant à la corrosion, façonnable avec usure réduite et conducteur de l'électricité, sur un substrat, en particulier sur un substrat métallique tel que par exemple une tôle d'acier, lequel substrat peut, le cas échéant, avoir été préalablement revêtu, par exemple d'au moins une couche de zinc et/ou d'une couche d'alliage contenant du zinc, et/ou d'au moins une couche de préparation, laquelle composition contient, en plus d'au moins une substance A se présentant sous la forme de particules électro-conductrices dures dont la dureté Mohr vaut au moins 5,5, au moins une substance B, qui se présente sous la forme de particules inorganiques électro-conductrices ou semi-conductrices, tendres ou très tendres et lubrifiantes, et/ou au moins une substance C, qui se présente sous la forme de particules métalliques électro-conductrices ou semi-conductrices, tendres ou dures, et/ou de noir de fumée, ainsi qu'au moins un liant et au moins un agent de réticulation et/ou au moins un photoamorceur, ainsi que, le cas échéant, au moins un composé servant à une réticulation ultérieure, au moins un adjuvant, au moins un pigment D de protection anti-corrosion, au moins un inhibiteur de corrosion non particulaire, au moins un solvant organique et/ou de l'eau, les substances A, B et C étant des pigments insolubles ou peu solubles dans l'eau, et laquelle composition est **caractérisée en ce que** la somme du poids de particules inorganiques lubrifiantes B et du poids de particules métalliques et/ou de noir de fumée C représente de 0,25 à 99,5 % du poids total Σ(A+B+C) des pigments insolubles ou peu solubles dans l'eau, et **en ce que** la taille des particules électro-conductrices dures A, exprimée par la valeur du centile d₉₉ en taille des particules mesurée à l'aide d'un appareil "Mastersizer" de type S de la firme Malvern Instruments, est inférieure à 10 µm.

2. Composition conforme à la revendication 1, **caractérisée en ce que** le poids total Σ(A+B+C) des pigments insolubles ou peu solubles dans l'eau représente de 30 à 99 % du poids total Σ(A+B+C+D) de l'ensemble des pigments.

3. Composition conforme à la revendication 1 ou 2, **caractérisée en ce que**, dans le mélange constitué des particules électro-conductrices dures A de tous les types, la valeur médiane d₅₀ de la taille des particules se situe dans l'intervalle allant de 0,1 à 2,5 µm, et en particulier, dans l'intervalle allant de 0,2 à 2 µm.

4. Composition conforme à l'une des revendications précédentes, **caractérisée en ce que**, dans le mélange constitué des particules électro-conductrices dures A de tous les types, la distribution des tailles de particules suit une courbe à pente raide, où la valeur du centile d₉₉ en taille des particules est au maximum 12 fois plus grande que la valeur du décile d₁₀ en taille des particules.

5. Composition conforme à l'une des revendications précédentes, **caractérisée en ce que**, dans le mélange constitué des particules lubrifiantes tendres ou très tendres B de tous les types, lors de son addition à la composition, la valeur du centile d₉₉ en taille des particules se situe dans l'intervalle allant de 1 à 30 µm.

6. Composition conforme à l'une des revendications précédentes, **caractérisée en ce que**, dans le mélange constitué des particules lubrifiantes tendres ou très tendres B de tous les types, lors de son addition à la composition, la valeur médiane d₅₀ de la taille des particules se situe dans l'intervalle allant de 0,1 à 20 µm.

7. Composition conforme à l'une des revendications précédentes, **caractérisée en ce que** la taille médiane d₅₀ des particules lubrifiantes tendres ou très tendres B, lors de leur addition à la composition, vaut de 1,5 à 7 fois la taille médiane d₅₀ des particules électro-conductrices dures A.

8. Composition conforme à l'une des revendications précédentes, **caractérisée en ce que**, dans le mélange constitué des particules métalliques et/ou de noir de fumée C de tous les types, lors de son addition à la composition, la valeur du centile d₉₉ en taille des particules se situe dans l'intervalle allant de 0,05 à 20 µm.

9. Composition conforme à l'une des revendications précédentes, **caractérisée en ce que**, dans le mélange constitué des particules métalliques et/ou de noir de fumée C de tous les types, lors de son addition à la composition, la valeur médiane d₅₀ de la taille des particules se situe dans l'intervalle allant de 0,01 à 10 µm.

10. Composition conforme à l'une des revendications précédentes, **caractérisée en ce que** la taille médiane d₅₀ des particules métalliques et/ou de noir de fumée C, lors de leur addition à la composition, vaut de 0,1 à 4 fois la taille médiane d₅₀ des particules électro-conductrices dures A.

11. Composition conforme à l'une des revendications précédentes, **caractérisée en ce que** la proportion pondérale des particules électro-conductrices dures A dans la composition vaut de 10 à 80 % et la proportion pondérale des particules lubrifiantes tendres ou très tendres B dans la composition vaut de 0,1 à 16 %, chacun de ces pourcentages étant rapporté au poids de matières solides dans le vernis humide.

12. Composition conforme à l'une des revendications précédentes, **caractérisée en ce que** la proportion pondérale des particules métalliques et/ou de noir de fumée C dans la composition vaut de 0 à 75 %, ce pourcentage étant rapporté au poids de matières solides dans le vernis humide.

13. Composition conforme à l'une des revendications précédentes, **caractérisée en ce que**, dans le mélange constitué des particules protectrices anti-corrosion D de tous les types, lors de son addition à la composition, la valeur médiane d₅₀ de la taille des particules se situe dans l'intervalle allant de 0,01 à 5 µm.

14. Composition conforme à l'une des revendications précédentes, **caractérisée en ce que**, dans le mélange constitué des particules protectrices anti-corrosion D de tous les types, lors de son addition à la composition, la valeur du centile d₉₉ en taille des particules se situe dans l'intervalle allant de 0,03 à 10 µm.

15. Composition conforme à l'une des revendications précédentes, **caractérisée en ce que** les particules électro-conductrices dures A sont des substances à base de composés ou de mélanges de composés avec des spinelles ou de spinelles telles que, par exemple, Fe₃O₄, Mn₃O₄ et FeMn₂O₄, et/ou d'autres substances à base de borures, carbures, oxydes, phosphates, phosphures, silicates ou siliciures ou de particules à revêtement électro-conducteur et/ou leur mélange ou leur combinaison globale, et **en ce que**, le cas échéant, sont contenues d'autres particules métalliques et/ou de noir de fumée C choisies parmi des particules de fer, aluminium, cobalt, cuivre, molybdène, nickel, niobium, argent, tantale, titane, vanadium, tungstène, zinc, étain, et/ou alliages contenant fer, aluminium, cobalt, cuivre, molybdène, nickel, niobium, argent, tantale, titane, vanadium, tungstène, zinc et/ou étain.

16. Composition conforme à l'une des revendications précédentes, **caractérisée en ce qu'**au moins 30 % en poids des particules électro-conductrices dures A sont constituées d'oxydes et/ou de phosphures principalement à base de fer, aluminium, cobalt, cuivre, manganèse molybdène, nickel, niobium, tantale, titane, vanadium, tungstène, zinc et/ou étain.

17. Composition conforme à l'une des revendications précédentes, **caractérisée en ce que** les particules lubrifiantes tendres ou très tendres B sont, pour la majorité d'entre elles ou leur totalité, constituées de graphite, de sulfures, de séléniures et/ou de tellurures, et en particulier de graphite, de sulfure contenant de l'antimoine, de sulfure contenant de l'étain, de sulfure contenant du molybdène et/ou de sulfure contenant du tungstène.

18. Composition conforme à l'une des revendications précédentes, **caractérisée en ce qu'**elle ne contient pas plus de 0,5 % en poids, et de préférence, pas plus de 0,2 % en poids, de cire et/ou de substances dotées de propriétés de cires, ce pourcentage étant rapporté au poids à sec du vernis humide, et mieux encore, ni cire ni aucune substance dotée de propriétés de cires.

19. Procédé de production, sur un substrat, d'un revêtement élastique et résistant à la corrosion, comprenant un polymère et des particules inorganiques, **caractérisé en ce que** l'on dépose sur un substrat, éventuellement préalablement revêtu, une composition conforme à l'une des revendications 1 à 18, on la fait éventuellement sécher et on lui fait subir une réticulation au moins partielle.

20. Procédé conforme à la revendication 19, **caractérisé en ce que** les particules lubrifiantes tendres ou très tendres B, telles par exemple des particules de graphite, ne sont que peu moulues ou ne le sont pas, que ce soit avant leur addition à la composition ou au sein de la composition et/ou d'une partie de la composition.

21. Procédé conforme à la revendication 19 ou 20, **caractérisé en ce que** les particules électro-conductrices dures A sont moulues à part.

22. Procédé conforme à l'une des revendications 19 à 21, **caractérisé en ce que**, lorsque les particules électro-conductrices dures A sont moulues, ce sont en majorité les grains les plus gros qui sont réduits, de sorte que la distribution des tailles de particules se rétrécit.

23. Procédé conforme à l'une des revendications 19 à 22, **caractérisé en ce que** la valeur du centile d₉₉ en taille des particules électro-conductrices dures A n'est pas sensiblement plus grande, n'est pas plus grande ou n'est qu'un peu plus petite que l'épaisseur moyenne du revêtement.

24. Procédé conforme à l'une des revendications 19 à 23, **caractérisé en ce que** l'on fait subir à la composition déposée sur le substrat un séchage, une cuisson, une irradiation formant des radicaux libres et/ou un chauffage, afin d'en faire un revêtement élastique et résistant à la corrosion qui soit bien réticulé.

25. Procédé conforme à l'une des revendications 19 à 24, **caractérisé en ce que** l'on forme un revêtement dont l'épaisseur, mesurée à sec par examen au microscope d'une coupe polie, vaut moins de 10 µm, en particulier moins de 8 µm, de préférence moins de 6 µm, et surtout moins de 4 µm.

26. Procédé conforme à l'une des revendications 19 à 25, **caractérisé en ce que** le substrat est constitué d'au moins un métal et/ou d'au moins un alliage et, le cas échéant, préalablement revêtu, et constitué en particulier par une tôle en aluminium, en un alliage à base d'aluminium, de fer ou de magnésium ou en acier, par exemple en un acier pour tôles de véhicule automobile.

27. Procédé conforme à l'une des revendications 19 à 26, **caractérisé en ce que** l'on dépose la composition de l'invention directement sur un revêtement préalablement appliqué.

28. Revêtement électro-conducteur contenant des polymères et des particules inorganiques, fabriqué avec une composition conforme à l'une des revendications 1 à 18 et/ou fabriqué selon un procédé conforme à l'une des revendications 19 à 27.

29. Emploi d'un revêtement conforme à la revendication 28 en tant que primaire de soudage, en tant que couche de protection lors d'un façonnage et/ou d'un assemblage, en tant que protection contre la corrosion des surfaces ou des arêtes, joints d'assemblage et/ou soudures, en tant que mesure de protection à la place d'un remplissage de cavités et/ou d'une étanchéification de joints, en particulier dans la construction automobile ou la construction aéronautique.
